# EUROPEAN PATENT APPLICATION

(11) **EP 4 752 840 A1**
(43) Date of publication of application: **03.06.2026**
(21) Application number: 24854504.8
(22) Date of filing: 11.07.2024
(51) Int. Cl.: G06T 13/40, G06T 19/00, G06T 19/20, G06F 3/04815, G06F 21/31, G06F 3/0484, G02B 27/01

(54) **ELECTRONIC DEVICE AND METHOD FOR MANAGING AND DISPLAYING AVATARS OF MULTIPLE PROVIDERS**

(30) Priority: 14.08.2023 KR 20230106527; 30.08.2023 KR 20230114973
(71) Applicant: Samsung Electronics Co., Ltd., Suwon-si, Gyeonggi-do 16677 (KR)
(72) Inventor: SEO, Hoyoung, Suwon-si, Gyeonggi-do 16677 (KR); JEONG, Moonyong, Suwon-si, Gyeonggi-do 16677 (KR)
(74) Representative: HGF
(86) International application number: PCT/KR2024/095917
(87) International publication number: WO 2025/037953

(57) **Abstract**

This wearable device may comprise: a memory for storing instructions; a display; and at least one processor. The instructions, when executed individually or collectively by the at least one processor, may instruct the wearable device to: display a task bar including an icon of a first software application for integrating avatars provided by source applications; execute a second software application for providing a virtual environment stored in the wearable device on the basis of at least a part of a user input; display the virtual environment including a first avatar in a first state in which the first avatar provided by the second software application is set for the second software application; and display the virtual environment including a second avatar from among the avatars on the basis of the icon for displaying the second avatar in a second state different from the first state.

## Description

### [Technical Field]

The following descriptions relate to an electronic device and a method for managing and displaying avatars of a plurality of providers.

### [Background Art]

In order to provide an enhanced user experience, an electronic device that provides an extended reality service displaying information generated by a computer in association with an external object in a real world or a virtual object in a virtual world is being developed. The electronic device may include a wearable device that may be worn by a user. For example, the electronic device may include user equipment, AR glasses, VR glasses, and/or a head-mounted device (HMD) (e.g., a video see through (VST) HMD and an optical see through (OST) HMD).

### [Disclosure]

### [Technical Solution]

The wearable device may include a display. The wearable device may include at least one processor. The at least one processor may be configured to display, via the display, a global menu (a task bar) including an icon of a first software application for merging avatars provided by source applications. The icon may include a region for displaying an avatar set among the avatars. The at least one processor may be configured to execute a second software application providing a virtual environment stored in the wearable device based on at least a part of an input of a user. The at least one processor may be configured to display, via the display, the virtual environment including a first avatar, in a first state in which the first avatar provided by the second software application is set for the second software application. The at least one processor may be configured to display, via the display, the virtual environment including a second avatar based on the icon displaying the second avatar among the avatars in a second state different from the first state.

A method performed by a wearable device may include displaying, via a display, a task bar including an icon of a first software application for merging avatars provided by source applications. The icon may include a region for displaying an avatar set among the avatars. The method may include executing a second software application providing a virtual environment stored in the wearable device based on at least a part of an input of a user. The method may include displaying the virtual environment including a first avatar, in a first state in which the first avatar provided by the second software application is set for the second software application. The method may include displaying the virtual environment including a second avatar based on the icon displaying the second avatar among the avatars in a second state different from the first state.

A non-transitory computer-readable storage medium, when executed by at least one processor of a wearable device including a display, may store one or more programs including instructions that cause the wearable device to display, via the display, a task bar including an icon of a first software application for merging avatars provided by source applications. The icon may include a region for displaying an avatar set among the avatars. The non-transitory computer-readable storage medium, when executed by the at least one processor, may store one or more programs including instructions that cause the wearable device to execute a second software application providing a virtual environment stored in the wearable device based on at least a part of an input of a user. The non-transitory computer-readable storage medium, when executed by the at least one processor, may store one or more programs including instructions that cause the wearable device to display, via the display, the virtual environment including a first avatar, in a first state in which the first avatar provided by the second software application is set for the second software application. The non-transitory computer-readable storage medium, when executed by the at least one processor, may store one or more programs including instructions that cause the wearable device to display, via the display, the virtual environment including a second avatar based on the icon displaying the second avatar among the avatars in a second state different from the first state.

### [Description of the Drawings]

FIG. 1 is a block diagram of an electronic device in a network environment according to various embodiments.
FIG. 2A illustrates an example of a perspective view of a wearable device according to various embodiments.
FIG. 2B illustrates an example of one or more hardware disposed in a wearable device according to various embodiments.
FIGS. 3A and 3B illustrate examples of an exterior of a wearable device according to various embodiments.
FIG. 4A illustrates an example of a method in which a wearable device manages avatars obtained from a plurality of providers and displays the avatar in a software application of the wearable device.
FIG. 4B illustrates an example of synchronization of an avatar performed between a plurality of providers, a wearable device, and an external electronic device.
FIG. 5 illustrates an exemplary block diagram of a wearable device.
FIG. 6 illustrates an example of an operation flow for a method of managing avatars obtained from a plurality of providers and displaying the avatar in a software application of a wearable device.
FIG. 7A illustrates an example of a method of obtaining avatar-related information from a plurality of providers.
FIGS. 7B and 7C illustrate examples of a method of performing processing of avatar-related information.
FIG. 8A illustrates examples of a user interface of a first software application for merging avatars.
FIG. 8B illustrates an example of a method of editing an avatar through a first software application.
FIG. 9A illustrates an example of a method of displaying a virtual environment provided by a second software application.
FIG. 9B illustrates an example of a method of processing an avatar displayed in a virtual environment provided by a second software application.
FIG. 10A illustrates an example of a method of displaying an avatar merged in a first software application based on a state of a second software application.
FIG. 10B illustrates an example of a method of setting a default avatar for each second software application.
FIGS. 11A and 11B illustrate examples of a virtual object displayed in a virtual environment while at least a part of an avatar is changed.
FIGS. 12A to 12C illustrate examples of a method of using a second software application through log-in information associated with an avatar of a first software application.
FIG. 13 illustrates an example of an operation flow of a method in which a wearable device manages avatars obtained from a plurality of providers and displays the avatar in a software application of the wearable device.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B).

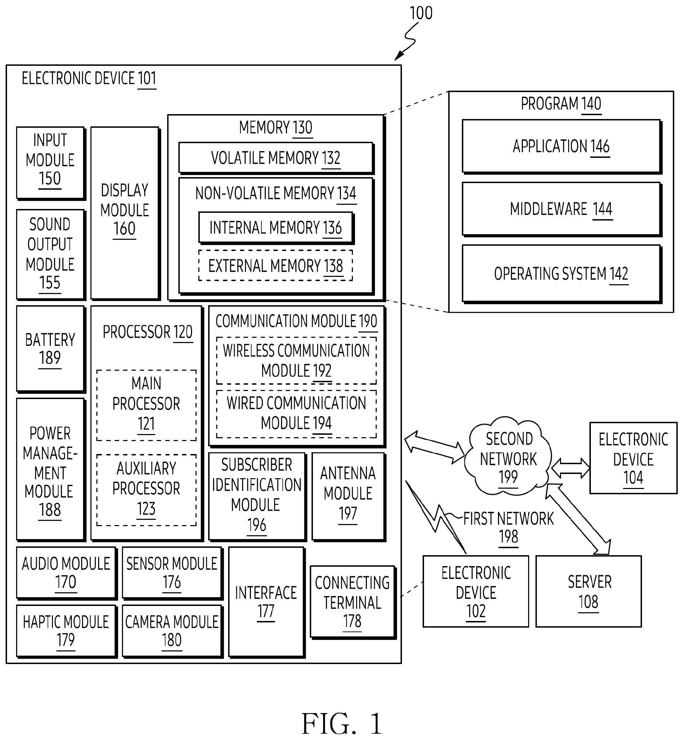

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

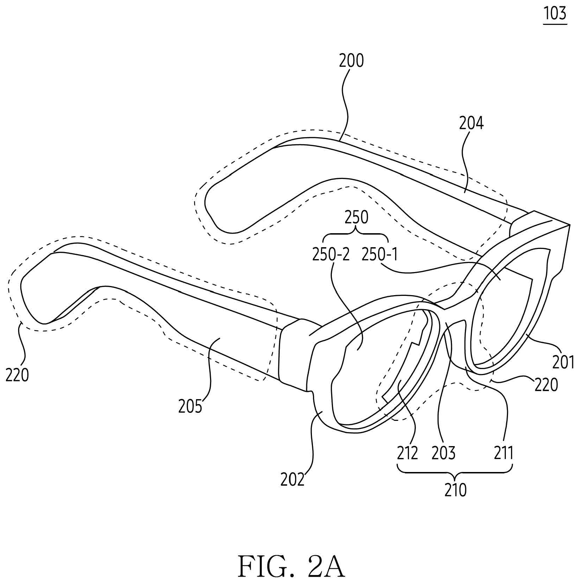

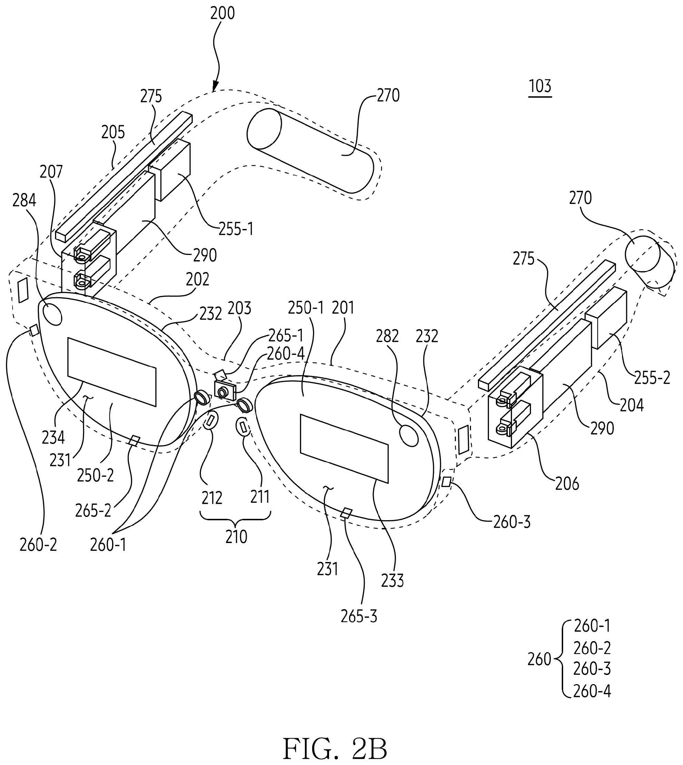

FIG. 2A illustrates an example of a perspective view of a wearable device according to various embodiments. FIG. 2B illustrates an example of one or more hardware disposed in a wearable device according to various embodiments.

According to an embodiment, a wearable device 103 may have a form of glasses that is wearable on a body part (e.g., head) of a user. The wearable device 103 of FIGS. 2A to 2B may be an example of the electronic device 101 of FIG. 1. The wearable device 103 may include a head-mounted display (HMD). For example, a housing of the wearable device 103 may include a flexible material such as rubber and/or silicone having a form closely attached to a portion of the user's head (for example, a portion of a face surrounding two eyes). For example, the housing of the wearable device 103 may include one or more straps able to be twined around the user's head, and/or one or more temples attachable to ears of the head.

Referring to FIG. 2A, according to an embodiment, the wearable device 103 may include at least one display 250 and a frame 200 supporting the at least one display 250.

According to an embodiment, the wearable device 103 may be wearable on a portion of the user's body. The wearable device 103 may provide extended reality (XR). For example, the XR may provide augmented reality (AR), virtual reality (VR), or mixed reality (MR) combining the augmented reality and the virtual reality to a user wearing the wearable device 103. For example, the wearable device 103 may display a virtual reality image provided from at least one optical device 282 and 284 of FIG. 2B on at least one display 250, in response to a user's preset gesture obtained through a motion recognition camera 260-2 and 260-3 of FIG. 2B.

According to an embodiment, the at least one display 250 may provide visual information to a user. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the user's left and right eyes, respectively.

Referring to FIG. 2B, the at least one display 250 may provide visual information transmitted through a lens included in the at least one display 250 from ambient light to a user and other visual information distinguished from the visual information2. The lens may be formed based on at least one of a fresnel lens, a pancake lens, or a multi-channel lens. For example, the at least one display 250 may include a first surface 231 and a second surface 232 opposite to the first surface 231. A display area may be formed on the second surface 232 of at least one display 250. When the user wears the wearable device 103, ambient light may be transmitted to the user by being incident on the first surface 231 and being penetrated through the second surface 232. For another example, the at least one display 250 may display an augmented reality image in which a virtual reality image provided by the at least one optical device 282 and 284 is combined with a reality screen transmitted through ambient light, on a display area formed on the second surface 232.

In an embodiment, the at least one display 250 may include at least one waveguide 233 and 234 that transmits light transmitted from the at least one optical device 282 and 284 by diffracting to the user. The at least one waveguide 233 and 234 may be formed based on at least one of glass, plastic, or polymer. A nano pattern may be formed on at least a portion of the outside or inside of the at least one waveguide 233 and 234. The nano pattern may be formed based on a grating structure having a polygonal or curved shape. Light incident to an end of the at least one waveguide 233 and 234 may be propagated to another end of the at least one waveguide 233 and 234 by the nano pattern. The at least one waveguide 233 and 234 may include at least one of at least one diffraction element (e.g., a diffractive optical element (DOE), a holographic optical element (HOE)), and a reflection element (e.g., a reflection mirror). For example, the at least one waveguide 233 and 234 may be disposed in the wearable device 103 to guide a screen displayed by the at least one display 250 to the user's eyes. For example, the screen may be transmitted to the user's eyes based on total internal reflection (TIR) generated in the at least one waveguide 233 and 234.

The wearable device 103 may analyze an object included in a real image collected through a photographing camera 260-4, combine with a virtual object corresponding to an object that becomes a subject of augmented reality provision among the analyzed object, and display on the at least one display 250. The virtual object may include at least one of text and images for various information associated with the object included in the real image. The wearable device 103 may analyze the object based on a multi-camera such as a stereo camera. For the object analysis, the wearable device 103 may execute space recognition (e.g., simultaneous localization and mapping (SLAM)) using the multi-camera and/or time-of-flight (ToF). The user wearing the wearable device 103 may watch an image displayed on the at least one display 250.

According to an embodiment, a frame 200 may be configured with a physical structure in which the wearable device 103 may be worn on the user's body. According to an embodiment, the frame 200 may be configured so that when the user wears the wearable device 103, the first display 250-1 and the second display 250-2 may be positioned corresponding to the user's left and right eyes. The frame 200 may support the at least one display 250. For example, the frame 200 may support the first display 250-1 and the second display 250-2 to be positioned at positions corresponding to the user's left and right eyes.

Referring to FIG. 2A, according to an embodiment, the frame 200 may include an area 220 at least partially in contact with the portion of the user's body in case that the user wears the wearable device 103. For example, the area 220 of the frame 200 in contact with the portion of the user's body may include an area in contact with a portion of the user's nose, a portion of the user's ear, and a portion of the side of the user's face that the wearable device 103 contacts. According to an embodiment, the frame 200 may include a nose pad 210 that is contacted on the portion of the user's body. When the wearable device 103 is worn by the user, the nose pad 210 may be contacted on the portion of the user's nose. The frame 200 may include a first temple 204 and a second temple 205, which are contacted on another portion of the user's body that is distinct from the portion of the user's body.

For example, the frame 200 may include a first rim 201 surrounding at least a portion of the first display 250-1, a second rim 202 surrounding at least a portion of the second display 250-2, a bridge 203 disposed between the first rim 201 and the second rim 202, a first pad 211 disposed along a portion of the edge of the first rim 201 from one end of the bridge 203, a second pad 212 disposed along a portion of the edge of the second rim 202 from the other end of the bridge 203, the first temple 204 extending from the first rim 201 and fixed to a portion of the wearer's ear, and the second temple 205 extending from the second rim 202 and fixed to a portion of the ear opposite to the ear. The first pad 211 and the second pad 212 may be in contact with the portion of the user's nose, and the first temple 204 and the second temple 205 may be in contact with a portion of the user's face and the portion of the user's ear. The temples 204 and 205 may be rotatably connected to the rim through hinge units 206 and 207 of FIG. 2B. The first temple 204 may be rotatably connected with respect to the first rim 201 through the first hinge unit 206 disposed between the first rim 201 and the first temple 204. The second temple 205 may be rotatably connected with respect to the second rim 202 through the second hinge unit 207 disposed between the second rim 202 and the second temple 205. According to an embodiment, the wearable device 103 may identify an external object (e.g., a user's fingertip) touching the frame 200 and/or a gesture performed by the external object by using a touch sensor, a grip sensor, and/or a proximity sensor formed on at least a portion of the surface of the frame 200.

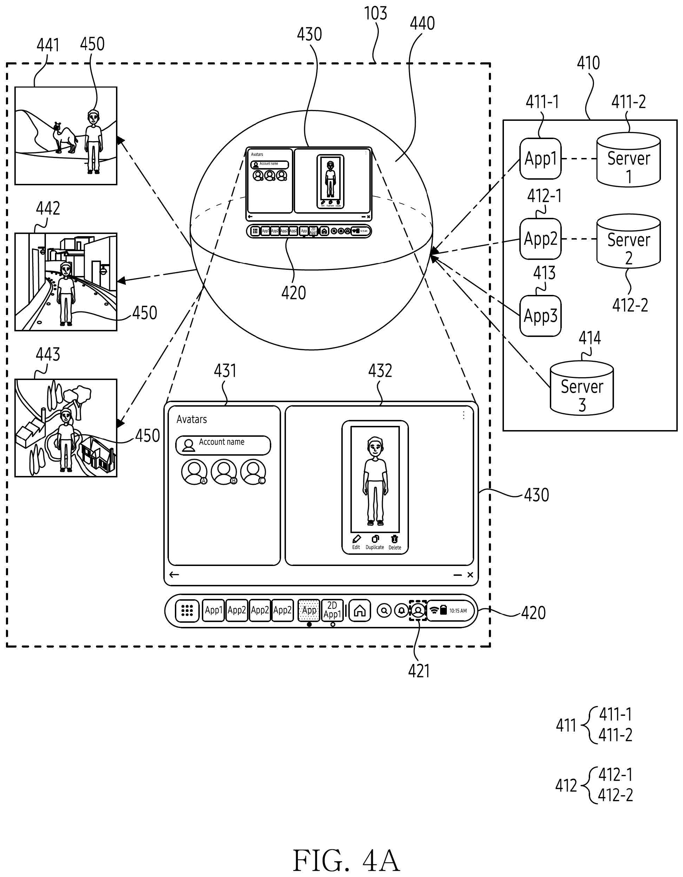

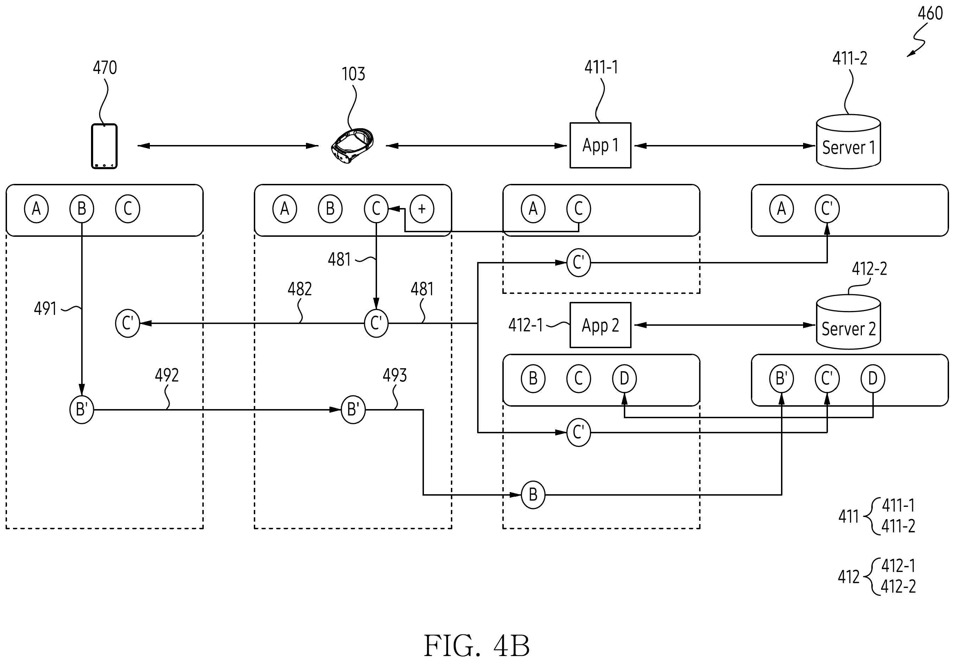

According to an embodiment, the wearable device 103 may include hardware (e.g., hardware to be described later based on the block diagram of FIG. 4) that performs various functions. For example, the hardware may include a battery module 270, an antenna module 275, the at least one optical device 282 and 284, speakers (e.g., speakers 255-1 and 255-2), a microphone (e.g., microphones 265-1, 265-2, and 265-3), a light emitting module (not illustrated), and/or a printed circuit board (PCB) 290 (e.g., printed circuit board). Various hardware may be disposed in the frame 200.

According to an embodiment, the microphone (e.g., the microphones 265-1, 265-2, and 265-3) of the wearable device 103 may obtain a sound signal, by being disposed on at least a portion of the frame 200. The first microphone 265-1 disposed on the bridge 203, the second microphone 265-2 disposed on the second rim 202, and the third microphone 265-3 disposed on the first rim 201 are illustrated in FIG. 2B, but the number and disposition of the microphone 265 are not limited to an embodiment of FIG. 2B. In case that the number of the microphone 265 included in the wearable device 103 is two or more, the wearable device 103 may identify a direction of the sound signal by using a plurality of microphones disposed on different portions of the frame 200.

According to an embodiment, the at least one optical device 282 and 284 may project a virtual object on the at least one display 250 in order to provide various image information to the user. For example, the at least one optical device 282 and 284 may be a projector. The at least one optical device 282 and 284 may be disposed adjacent to the at least one display 250 or may be included in the at least one display 250 as a portion of the at least one display 250. According to an embodiment, the wearable device 103 may include a first optical device 282 corresponding to the first display 250-1, and a second optical device 284 corresponding to the second display 250-2. For example, the at least one optical device 282 and 284 may include the first optical device 282 disposed at a periphery of the first display 250-1 and the second optical device 284 disposed at a periphery of the second display 250-2. The first optical device 282 may transmit light to the first waveguide 233 disposed on the first display 250-1, and the second optical device 284 may transmit light to the second waveguide 234 disposed on the second display 250-2.

In an embodiment, a camera 260 may include the photographing camera 260-4, an eye tracking camera (ET CAM) 260-1, and/or the motion recognition camera 260-2 and 260-3. The photographing camera 260-4, the eye tracking camera 260-1, and the motion recognition camera 260-2 and 260-3 may be disposed at different positions on the frame 200 and may perform different functions. The eye tracking camera 260-1 may output data indicating a position of eye or a gaze of the user wearing the wearable device 103. For example, the wearable device 103 may detect the gaze from an image including the user's pupil obtained through the eye tracking camera 260-1. By using the user's gaze obtained through the eye tracking camera 260-1, the wearable device 103 may perform gaze interaction with at least one object. The wearable device 103 may represent a portion corresponding to eye of an avatar indicating the user in the virtual space, by using the user's gaze obtained through the eye tracking camera 260-1. The wearable device 103 may render an image (or a screen) displayed on the at least one display 250, based on the position of the user's eye. For example, visual quality (e.g., resolution, brightness, saturation, grayscale, and PPI) of a first area related to the gaze within the image and visual quality of a second area distinguished from the first area may be different. For example, when the wearable device 103 supports an iris recognition function, user authentication may be performed based on iris information obtained using the eye tracking camera 260-1. An example in which the eye tracking camera 260-1 is disposed toward the user's right eye is illustrated in FIG. 2B, but the embodiment is not limited thereto, and the eye tracking camera 260-1 may be disposed alone toward the user's left eye or may be disposed toward two eyes.

In an embodiment, the photographing camera 260-4 may photograph a real image or background to be matched with a virtual image in order to implement the augmented reality or mixed reality content. The photographing camera 260-4 may photograph an image of a specific object existing at a position viewed by the user and may provide the image to the at least one display 250. The at least one display 250 may display one image in which a virtual image provided through the at least one optical device 282 and 284 is overlapped with information on the real image or background including an image of the specific object obtained by using the photographing camera 260-4. The wearable device 103 may compensate for depth information (e.g., a distance between the wearable device 103 and an external object obtained through a depth sensor), by using an image obtained through the photographing camera 260-4. The wearable device 103 may perform object recognition through an image obtained using the photographing camera 260-4. While displaying a screen representing a virtual space on the at least one display 250, the wearable device 103 may perform a pass through function for displaying an image obtained through the photographing camera 260-4 overlapping at least a portion of the screen. In an embodiment, the photographing camera 260-4 may be disposed on the bridge 203 disposed between the first rim 201 and the second rim 202.

The eye tracking camera 260-1 may implement a more realistic augmented reality by matching the user's gaze with the visual information provided on the at least one display 250, by tracking the gaze of the user wearing the wearable device 103. For example, when the user looks at the front, the wearable device 103 may naturally display environment information associated with the user's front on the at least one display 250 at a position where the user is positioned. The eye tracking camera 260-1 may be configured to capture an image of the user's pupil in order to determine the user's gaze. For example, the eye tracking camera 260-1 may receive gaze detection light reflected from the user's pupil and may track the user's gaze based on the position and movement of the received gaze detection light. In an embodiment, the eye tracking camera 260-1 may be disposed at a position corresponding to the user's left and right eyes. For example, the eye tracking camera 260-1 may be disposed in the first rim 201 and/or the second rim 202 to face the direction in which the user wearing the wearable device 103 is positioned.

The motion recognition camera 260-2 and 260-3 may provide a specific event to the screen provided on the at least one display 250 by recognizing the movement of the whole or portion of the user's body, such as the user's torso, hand, or face. The motion recognition camera 260-2 and 260-3 may obtain a signal corresponding to motion by recognizing the user's motion (e.g., gesture recognition), and may provide a display corresponding to the signal to the at least one display 250. The wearable device 103 may identify a signal corresponding to the operation and may perform a preset function based on the identification. The motion recognition camera 260-2 and 260-3 may be used to perform SLAM for 6 degrees of freedom pose (6 dof pose) and/or a space recognition function using a depth map. The wearable device 103 may perform a gesture recognition function and/or an object tracking function, by using the motion recognition camera 260-2 and 260-3. In an embodiment, the motion recognition camera 260-2 and camera 260-3 may be disposed on the first rim 201 and/or the second rim 202.

The camera 260 included in the wearable device 103 is not limited to the above-described eye tracking camera 260-1 and the motion recognition camera 260-2 and 260-3. For example, the wearable device 103 may identify an external object included in the FoV by using a camera disposed toward the user's FoV. The wearable device 103 identifying the external object may be performed based on a sensor for identifying a distance between the wearable device 103 and the external object, such as a depth sensor and/or a time of flight (ToF) sensor. The camera 260 disposed toward the FoV may support an autofocus function and/or an optical image stabilization (OIS) function. For example, in order to obtain an image including a face of the user wearing the wearable device 103, the wearable device 103 may include the camera 260 (e.g., a face tracking (FT) camera) disposed toward the face.

Although not illustrated, the wearable device 103 according to an embodiment may further include a light source (e.g., LED) that emits light toward a subject (e.g., user's eyes, face, and/or an external object in the FoV) photographed by using the camera 260. The light source may include an LED having an infrared wavelength. The light source may be disposed on at least one of the frame 200, and the hinge units 206 and 207.

According to an embodiment, the battery module 270 may supply power to electronic components of the wearable device 103. In an embodiment, the battery module 270 may be disposed in the first temple 204 and/or the second temple 205. For example, the battery module 270 may be a plurality of battery modules 270. The plurality of battery modules 270, respectively, may be disposed on each of the first temple 204 and the second temple 205. In an embodiment, the battery module 270 may be disposed at an end of the first temple 204 and/or the second temple 205.

The antenna module 275 may transmit the signal or power to the outside of the wearable device 103 or may receive the signal or power from the outside. In an embodiment, the antenna module 275 may be disposed in the first temple 204 and/or the second temple 205. For example, the antenna module 275 may be disposed close to one surface of the first temple 204 and/or the second temple 205.

The speaker 255 may output a sound signal to the outside of the wearable device 103. A sound output module may be referred to as a speaker. In an embodiment, the speaker 255 may be disposed in the first temple 204 and/or the second temple 205 in order to be disposed adjacent to the ear of the user wearing the wearable device 103. For example, the speaker 255 may include a second speaker 255-2 disposed adjacent to the user's left ear by being disposed in the first temple 204, and a first speaker 255-1 disposed adjacent to the user's right ear by being disposed in the second temple 205.

The light emitting module (not illustrated) may include at least one light emitting element. The light emitting module may emit light of a color corresponding to a specific state or may emit light through an operation corresponding to the specific state in order to visually provide information on a specific state of the wearable device 103 to the user. For example, when the wearable device 103 requires charging, it may emit red light at a constant cycle. In an embodiment, the light emitting module may be disposed on the first rim 201 and/or the second rim 202.

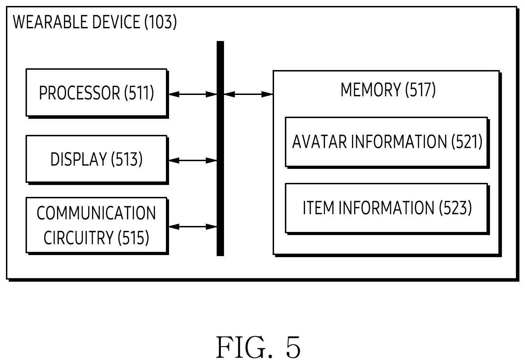

Referring to FIG. 2B, according to an embodiment, the wearable device 103 may include the printed circuit board (PCB) 290. The PCB 290 may be included in at least one of the first temple 204 or the second temple 205. The PCB 290 may include an interposer disposed between at least two sub PCBs. On the PCB 290, one or more hardware (e.g., hardware illustrated by different blocks of FIG. 5) included in the wearable device 103 may be disposed. The wearable device 103 may include a flexible PCB (FPCB) for interconnecting the hardware.

According to an embodiment, the wearable device 103 may include at least one of a gyro sensor, a gravity sensor, and/or an acceleration sensor for detecting the posture of the wearable device 103 and/or the posture of a body part (e.g., a head) of the user wearing the wearable device 103. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 103 may identify the user's motion and/or gesture performed to execute or stop a specific function of the wearable device 103 based on the IMU.

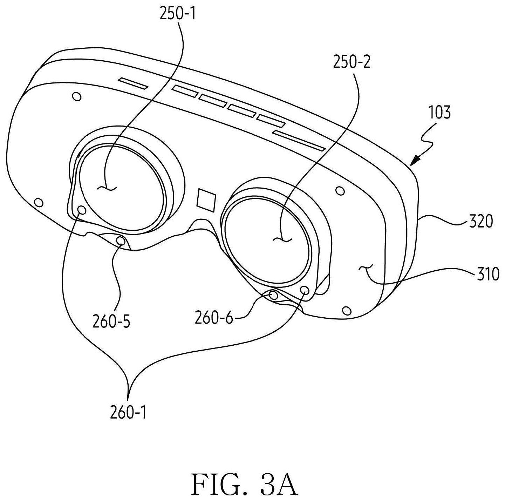

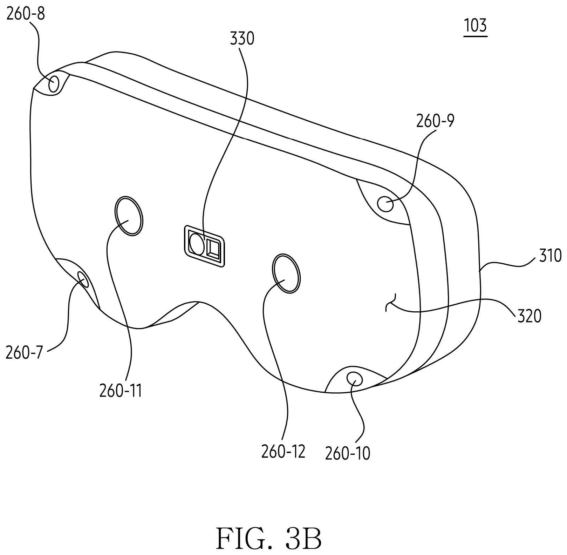

FIGS. 3A and 3B illustrate examples of an exterior of a wearable device according to various embodiments.

A wearable device 103 of FIGS. 3A to 3B may be an example of the electronic device 101 of FIG. 1. According to an embodiment, an example of an exterior of a first surface 310 of a housing of the wearable device 103 may be illustrated in FIG. 3A, and an example of an exterior of a second surface 320 opposite to the first surface 310 may be illustrated in FIG. 3B.

Referring to FIG. 3A, according to an embodiment, the first surface 310 of the wearable device 103 may have an attachable shape on the user's body part (e.g., the user's face). Although not illustrated, the wearable device 103 may further include a strap for being fixed on the user's body part, and/or one or more temples (e.g., the first temple 204 and/or the second temple 205 of FIGS. 2A to 2B). A first display 250-1 for outputting an image to the left eye among the user's two eyes and a second display 250-2 for outputting an image to the right eye among the user's two eyes may be disposed on the first surface 310. The wearable device 103 may further include rubber or silicon packing, which are formed on the first surface 310, for preventing interference by light (e.g., ambient light) different from the light emitted from the first display 250-1 and the second display 250-2.

According to an embodiment, the wearable device 103 may include cameras 260-1 for photographing and/or tracking two eyes of the user adjacent to each of the first display 250-1 and the second display 250-2. The cameras 260-1 may be referred to as the gaze tracking camera 260-1 of FIG. 2B. According to an embodiment, the wearable device 103 may include cameras 260-5 and 260-6 for photographing and/or recognizing the user's face. The cameras 260-5 and 260-6 may be referred to as a FT camera. The wearable device 103 may control an avatar representing a user in a virtual space, based on a motion of the user's face identified using the cameras 260-5 and 260-6.

Referring to FIG. 3B, a camera (e.g., cameras 260-7, 260-8, 260-9, 260-10, 260-11, and 260-12), and/or a sensor (e.g., the depth sensor 330) for obtaining information associated with the external environment of the wearable device 103 may be disposed on the second surface 320 opposite to the first surface 310 of FIG. 3A. For example, the cameras 260-7, 260-8, 260-9, and 260-10 may be disposed on the second surface 320 in order to recognize an external object. The cameras 260-7, 260-8, 260-9, and 260-10 may be referred to as the motion recognition cameras 260-2 and 260-3 of FIG. 2B.

For example, by using cameras 260-11 and 260-12, the wearable device 103 may obtain an image and/or video to be transmitted to each of the user's two eyes. The camera 260-11 may be disposed on the second surface 320 of the wearable device 103 to obtain an image to be displayed through the second display 250-2 corresponding to the right eye among the two eyes. The camera 260-12 may be disposed on the second surface 320 of the wearable device 103 to obtain an image to be displayed through the first display 250-1 corresponding to the left eye among the two eyes. The cameras 260-11 and 260-12 may be referred to as the photographing camera 260-4 of FIG. 2B.

According to an embodiment, the wearable device 103 may include the depth sensor 330 disposed on the second surface 320 in order to identify a distance between the wearable device 103 and the external object. By using the depth sensor 330, the wearable device 103 may obtain spatial information (e.g., a depth map) about at least a portion of the FoV of the user wearing the wearable device 103. Although not illustrated, a microphone for obtaining sound outputted from the external object may be disposed on the second surface 320 of the wearable device 103. The number of microphones may be one or more according to embodiments.

FIG. 4A illustrates an example of a method in which a wearable device manages avatars obtained from a plurality of providers and displays the avatar in a software application of the wearable device.

A wearable device 103 of FIG. 4A may indicate an example of the wearable device 103 of FIGS. 2A to 3B. For example, the wearable device 103 may include at least a part of the electronic device 101 of FIG. 1. In FIG. 4A, the wearable device 103 providing an XR environment is illustrated as an example, but an embodiment of the present disclosure is not limited thereto. For example, the wearable device 103 may also indicate an electronic device such as a smartphone or a tablet PC.

Referring to FIG. 4A, the wearable device 103 may obtain avatar-related information. For example, the wearable device 103 may obtain the avatar-related information from a source node 410. For example, the avatar-related information may include information for generating an avatar and information on an item worn by the avatar. For example, the item may be referred to as an asset. For example, the information for generating the avatar may be referred to as information on an avatar set. For example, the information on the item may be referred to as information on an item set.

According to an embodiment, the source node 410 may include a plurality of providers 411, 412, 413, and 414. For example, the providers 411, 412, 413, and 414 may indicate a subject providing an avatar. Each of the providers 411, 412, 413, and 414 may include at least one of an application or a server. The application may be referred to as a source application. The server may be referred to as a source server. For example, the first provider 411 may include a first source application 411-1 and a first server 411-2. For example, the first server 411-2 may manage the first source application 411-1. For example, the second provider 412 may include a second source application 412-1 and a second server 412-2. For example, the second server 412-2 may manage the second source application 412-1. For example, the third provider 413 may include a third source application 413. For example, the fourth provider 414 may include a third server 414. The providers 411, 412, 413, and 414 may also be referred to as a merged target, in that avatars provided by the providers 411, 412, 413, and 414 are merged through a first software application of the wearable device 103.

For example, the first software application may be referred to as a software application for merging the avatars of the providers 411, 412, 413, and 414. For example, the first software application may be referred to as an avatar merging system, an avatar merging app, or an avatar platform. Specific content related to this is described in FIG. 4B below.

For example, each of the providers 411, 412, 413, and 414 may provide the avatar-related information. For example, the first provider 411 may provide information on a first avatar set and information on a first item set to the wearable device 103. For example, the second provider 412 may provide information on a second avatar set and information on a second item set to the wearable device 103. For example, the third provider 413 may provide information on a third avatar set and information on a third item set to the wearable device 103. For example, the fourth provider 414 may provide information on a fourth avatar set and information on a fourth item set to the wearable device 103.

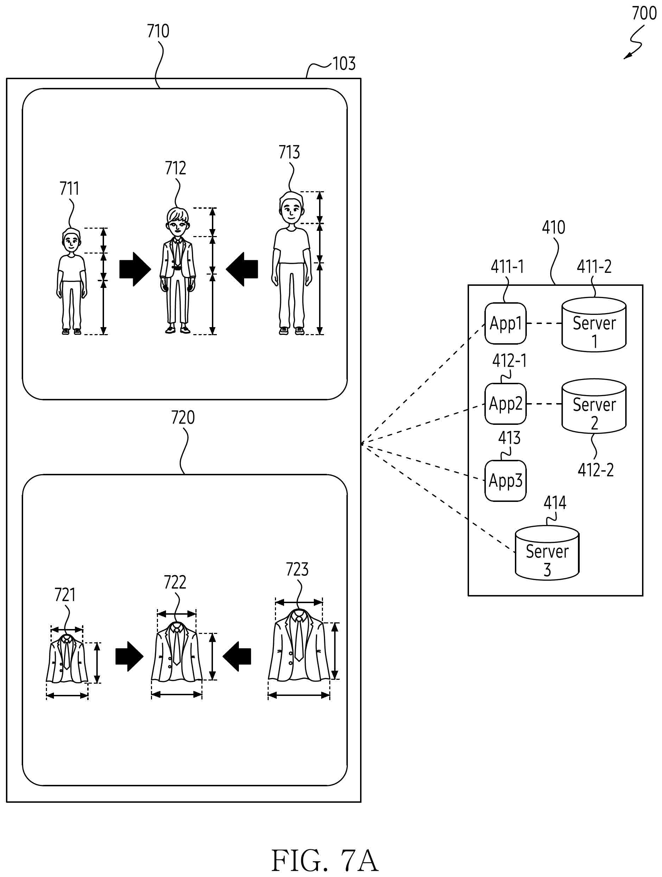

Although not illustrated in FIG. 4A, the wearable device 103 may store the avatar-related information obtained from the providers 411, 412, 413, and 414. For example, the wearable device 103 may store the avatar-related information in a state associated with account information of each of the providers 411, 412, 413, and 414. In other words, the wearable device 103 may store the avatar-related information for each account information. According to an embodiment, the wearable device 103 may perform normalization on the avatar-related information obtained from the providers 411, 412, 413, and 414. The normalization may indicate converting a proportion (or a ratio) of an avatar set by each of the providers 411, 412, 413, and 414 to a designated proportion supported by the first software application of the wearable device 103. Specific content related to this is described in FIGS. 7A to 7C below.

Referring to FIG. 4A, the wearable device 103 may display a task bar 420, a user interface (UI) 430 of the first software application, and a virtual environment 440. For example, the wearable device 103 may display the task bar 420, the UI 430, and the virtual environment 440 through a display (e.g., the display module 160 of FIG. 1) of the wearable device 103.

For example, the task bar 420 may indicate a global menu provided by the wearable device 103 as a virtual object. For example, the task bar 420 may include a plurality of icons. For example, the plurality of icons may include an icon for a home screen, an icon for providing software applications stored in the wearable device 103, and icons set for quick execution. According to an embodiment, the task bar 420 may include a visual object 421 provided by the first software application. For example, the visual object 421 may also be implemented as an icon of the first software application. For example, the visual object 421 may include a region for displaying an avatar set among avatars provided by the source node 410. For example, the first software application may be executed based on an input to the visual object 421. For example, the visual object 421 may be referred to as an enter end of the first software application. The UI 430 may be displayed in response to the execution of the first software application. For example, the task bar 420 may be referred to as a device menu, a global menu, or a global setting menu. In other words, the task bar 420 may be used to manage or provide information of the wearable device 103.

For example, the UI 430 may indicate a user interface for displaying and editing an avatar provided by the providers 411, 412, 413, and 414 of the source node 410 through the first software application. For example, the UI 430 may include a first portion 431 including a first visual object indicating account information and at least one second visual object indicating a candidate avatar according to the account information. In addition, for example, the UI 430 may include a second portion 432 to provide a preview (or a preview image) of a candidate avatar corresponding to a second visual object selected from among the at least one second visual object based on an input to the first portion 431.

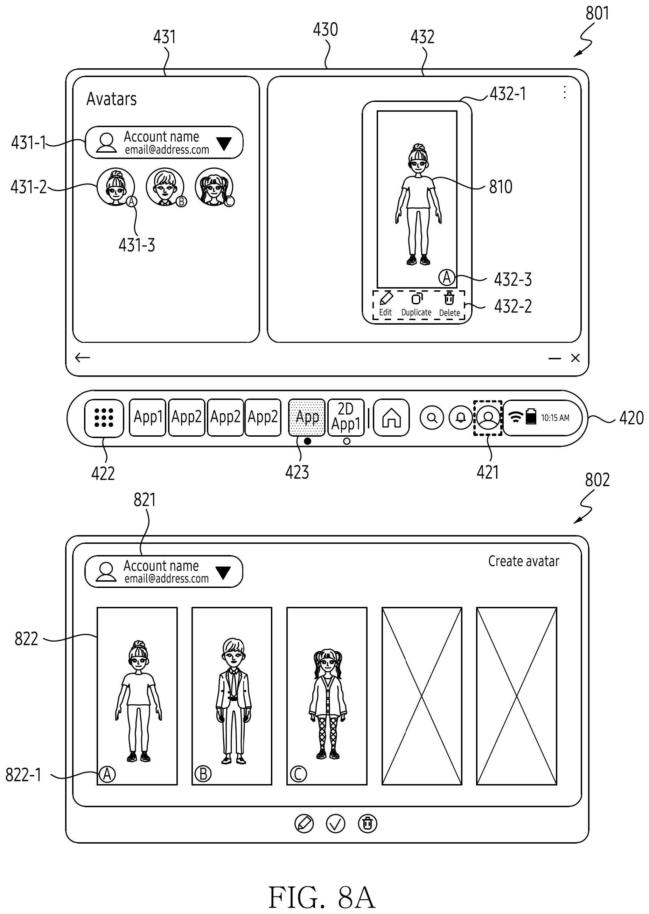

For example, the task bar 420 and the UI 430 may be at least partially superimposed on the virtual environment 440. For example, the virtual environment 440 may indicate an example of a virtual environment provided by second software applications 441, 442, and 443. Alternatively, for example, the virtual environment 440 may be an environment (e.g., a VST environment) generated by reconstructing an image of a real environment outside the wearable device 103 based on the second software application 441, 442, or 443. However, an embodiment of the present disclosure is not limited thereto. For example, the task bar 420 and the UI 430 may also be displayed on a home screen. The home screen may indicate a main menu of the wearable device 103. For example, the home screen may indicate a screen on which the virtual environment is not displayed. Specific content of the task bar 420 and the UI 430 is described in FIG. 8A below.

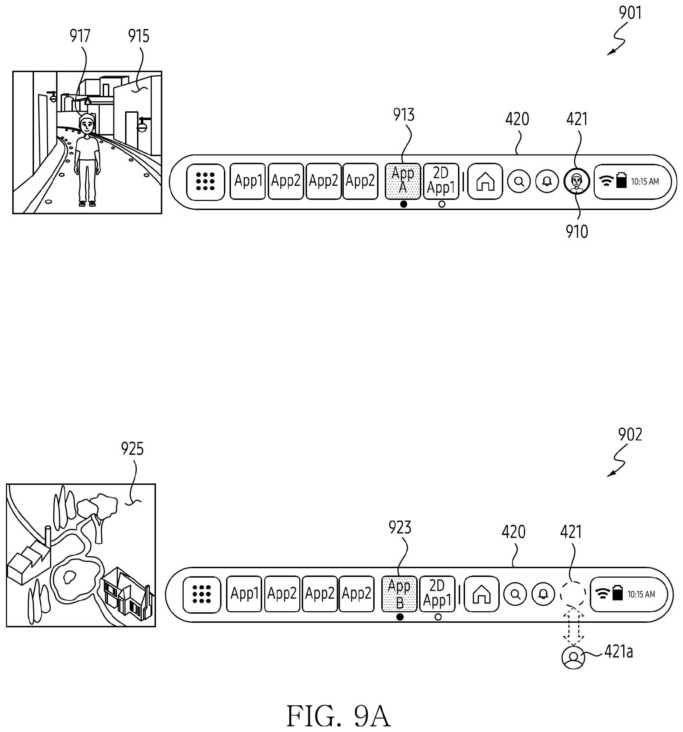

Referring to FIG. 4A, the wearable device 103 may display an avatar 450 processed based on the first software application in the second software applications 441, 442, and 443. The second software applications 441, 442, and 443 providing a virtual environment may be referred to as an XR application or a target application. For example, the virtual environment provided by each of the second software applications 441, 442, and 443 may include a 3D virtual environment. However, an embodiment of the present disclosure is not limited thereto. For example, the virtual environment may also include a 2D virtual environment. For example, the wearable device 103 may process the avatar 450 based on the first software application. For example, the avatar 450 may be included in avatars provided by the source node 410. For example, the processing of the avatar 450 may include merging the avatars, performing editing of the avatar 450, and storing the edited avatar 450. For example, the wearable device 103 may display the stored avatar 450 in a virtual environment in using the second software applications 441, 442, and 443. For example, the wearable device 103 may display a first virtual environment including the avatar 450 while using the second software application 441 that provides the first virtual environment. For example, the wearable device 103 may display a second virtual environment including the avatar 450 while using the second software application 442 that provides the second virtual environment. For example, the wearable device 103 may display a third virtual environment including the avatar 450 while using the second software application 443 that provides the third virtual environment. In the example of FIG. 4A, a case that each of the second software applications 441, 442, and 443 is a software application that provides a virtual environment and supports displaying of the avatar 450 is illustrated, but an embodiment of the present disclosure is not limited thereto. For example, the wearable device 103 may provide a virtual environment through a third software application different from the second software applications 441, 442, and 443. In this case, the third software application may not support displaying of the avatar 450. Specific content related to this is described in FIG. 9A below.

FIG. 4B illustrates an example of synchronization of an avatar performed between a plurality of providers, a wearable device, and an external electronic device.

FIG. 4B illustrates an example 460 of a method of synchronizing an avatar between a first provider 411 and a second provider 412, a wearable device 103, and an external electronic device 470. For example, the first provider 411 and the second provider 412 may be included in the source node 410 of FIG. 4A. For example, the wearable device 103 of FIG. 4B may indicate the wearable device 103 of FIG. 4A.

Referring to the example 460, the wearable device 103 may be connected to the external electronic device 470. For example, the wearable device 103 may be synchronized with the external electronic device 470. For example, account information of the wearable device 103 may be the same as account information of the external electronic device 470. In other words, the wearable device 103 may be logged in based on account information of a user, and the external electronic device 470 may also be logged in based on the account information of the user. For example, the account information of the user may include account information related to a manufacturer of the wearable device 103 and the external electronic device 470.

Referring to the example 460, the wearable device 103 may obtain avatar-related information from the first provider 411 and the second provider 412. For example, the wearable device 103 may obtain information on an avatar A and an avatar C through a first source application 411-1 of the first provider 411. The first source application 411-1 and a first server 411-2 of the first provider 411 may be in a state in which the wearable device 103, the avatar A, and the avatar C are synchronized. In addition, for example, the wearable device 103 may obtain information on an avatar B and the avatar C through a second source application 412-1 of the second provider 412. The second source application 412-1 and a second server 412-2 of the second provider 412 may be in a state in which the wearable device 103, the avatar B, and the avatar C are synchronized. An avatar D may be in a synchronized state only in the second source application 412-1 and the second server 412-2. In other words, the avatar D may not be uploaded to the first software application provided by the wearable device 103. For example, the avatar D that is not uploaded among the avatar B, the avatar C, and the avatar D may be selected based on the user.

Referring to the example 460, the avatar A, the avatar B, and the avatar C may be uploaded to the first software application of the wearable device 103. For example, the wearable device 103 may provide the avatar A, the avatar B, and the avatar C through the first software application. For example, the wearable device 103 and the external electronic device 470 may be synchronized with each other. In other words, an avatar (e.g., the avatar A, the avatar B, and the avatar C) uploaded to a first software application of the external electronic device 470 may correspond to an avatar uploaded to the first software application of the wearable device 103.

Referring to the example 460, the wearable device 103 may perform editing of an avatar through the first software application. The first software application may be stored and executed in the wearable device 103. In operation 481, the wearable device 103 may perform editing of the avatar C based on at least a part of an input of the user. Accordingly, the wearable device 103 may generate an avatar C' changed from the avatar C. In operation 482, the wearable device 103 may request the synchronized external electronic device 470 to change the avatar. In addition, in operation 481, the wearable device 103 may request the providers 411 and 412 to change the avatar. For example, the change of the avatar may include changing the avatar C to the avatar C'. In response to the request for changing the avatar, the external electronic device 470 may change the avatar C to the avatar C' and store it. In addition, each of the providers 411 and 412 may change and store the avatar C to the avatar C'.

In addition, referring to the example 460, the external electronic device 470 may perform editing of an avatar through the first software application. The first software application may be stored and executed in the external electronic device 470. In operation 491, the external electronic device 470 may perform editing of the avatar B based on at least a part of an input of the user. Accordingly, the external electronic device 470 may generate an avatar B' changed from the avatar B. In operation 492, the external electronic device 470 may request the synchronized wearable device 103 to change the avatar. In response to the request for changing the avatar, the wearable device 103 may change the avatar B to the avatar B' and store it. In addition, in operation 493, the wearable device 103 may request the second provider 412 to change the avatar in response to changing the avatar B to the avatar B'. For example, the change of the avatar may include changing the avatar B to the avatar B'. In addition, the second provider 412 may change the avatar B to the avatar B' and store it.

Referring to the above description, the wearable device 103 (or the external electronic device 470) may manage avatars obtained from the providers 411 and 412. For example, the wearable device 103 may merge the avatars, perform editing of the merged avatars, and perform synchronization of the edited avatar with another node (e.g., the external electronic device 470 or the providers 411 and 412).

An electronic device and a method according to embodiments of the present disclosure may provide, through the first software application, an avatar and an item (or an asset) for the avatar provided by different services (e.g., a source server and a source application) in a compatible (or integrated) manner. In addition, the electronic device and the method according to embodiments of the present disclosure may provide an editing function of a merged avatar through the first software application. In addition, the electronic device and the method according to embodiments of the present disclosure may use (or display), through the first software application, an avatar obtained from the source server or the source application in a second software application that provides a virtual environment. In this case, the electronic device and the method according to embodiments of the present disclosure may perform login for one or more second software applications through log-in information associated with the avatar provided by the first software application. The electronic device and the method according to embodiments of the present disclosure may use an avatar provided by a specific service in another service. Accordingly, the electronic device and the method according to embodiments of the present disclosure may provide a user with a continuous user experience in using various services.

FIG. 5 illustrates an exemplary block diagram of a wearable device.

A wearable device 103 of FIG. 5 may indicate an example of the electronic device 101 of FIG. 1, the wearable device 103 of FIGS. 2A to 3B, and the wearable device 103 of FIGS. 4A and 4B.

Referring to FIG. 5, the wearable device 103 according to an embodiment may include at least one of a processor 511, a display 513, communication circuitry 515, or memory 517. The processor 511, the display 513, the communication circuitry 515, and the memory 517 may be electronically and/or operably coupled with each other by a communication bus. Hereinafter, hardware components being operably coupled may mean that a direct connection or an indirect connection between the hardware components is established by wire or wirelessly such that a second hardware component is controlled by a first hardware component among the hardware components. Although illustrated based on different blocks, an embodiment is not limited thereto, and some of the hardware components illustrated in FIG. 5 (at least a part of the processor 511, the communication circuitry 515, and the memory 517) may be included in a single integrated circuit such as a system on a chip (SoC). A type and/or the number of the hardware component included in the wearable device 103 is not limited to as illustrated in FIG. 5. For example, the wearable device 103 may include only some of the hardware components illustrated in FIG. 5.

The processor 511 of the wearable device 103 according to an embodiment may include a hardware component for processing data based on one or more instructions. The hardware component for processing data may include, for example, an arithmetic and logic unit (ALU), a floating point unit (FPU), and a field programmable gate array (FPGA). As an example, the hardware component for processing data may include a central processing unit (CPU), a graphics processing unit (GPU), a digital signal processing (DSP), and/or a neural processing unit (NPU). The number of processors 511 may be one or more. For example, the processor 511 may have a structure of a multi-core processor such as a dual core, a quad core, or a hexa core. The processor 511 of FIG. 5 may include at least a part of the processor 120 of FIG. 1.

For example, the processor 511 may include various processing circuitry and/or a plurality of processors. For example, a term "processor" used in the present document, including claims, may include various processing circuitry including at least one processor, and one or more of the at least one processor may be configured to perform various functions described below individually and/or collectively in a distributed method. As used below, in a case that "processor", "at least one processor", and "one or more processors" are described as being configured to perform various functions, these terms are not limited to an example and encompass situations in which one processor performs a part of the cited functions and other processor(s) perform another part of the cited functions, and/or situations in which one processor may perform all of the cited functions. Additionally, the at least one processor may include a combination of processors that perform listed/disclosed various functions, for example, in a distributed method. The at least one processor may execute program instructions to achieve or perform various functions.

The display 513 of the wearable device 103 according to an embodiment may output visualized information (e.g., visual information of FIGS. 8A, 8B, 9A, 9B, 10A, 10B, 11A, 11B, 12A, 12B, and 12C) to a user. The number of displays 513 included in the wearable device 103 may be one or more. For example, the display 513 may output visualized information to the user by being controlled by the processor 511 and/or a graphic processing unit (GPU) (not illustrated). The display 513 may include a flat panel display (FPD) and/or electronic paper. The FPD may include a liquid crystal display (LCD), a plasma display panel (PDP), a digital mirror device (DMD), one or more light emitting diodes (LEDs), and/or a micro LED. The LED may include an organic LED (OLED). The display 513 of FIG. 5 may include at least a part of the display module 160 of FIG. 1.

In an embodiment, transmission of light may occur in at least a part of the display 513. The wearable device 103 may provide a user experience related to augmented reality by providing a combination of light outputted via the display 513 and light penetrating the display 513 to the user. As described above with reference to FIGS. 2A and 2B, and/or 3A and 3B, the display 513 of the wearable device 103 according to an embodiment may have a structure for covering an entire FoV of the user or emitting light toward the FoV of the user, in a state of being worn on a part of a body of the user such as a head. Although not illustrated, the wearable device 103 may include another output means for outputting information in another form other than a visual form and an audible form. For example, the wearable device 103 may include at least one speaker for outputting an audio signal, and/or a motor (or an actuator) for providing haptic feedback based on vibration. For example, the wearable device 103 may render an image for providing a user experience related to virtual reality, and may also display the rendered image via the display 513.

The communication circuitry 515 of the wearable device 103 according to an embodiment may include hardware for supporting transmission and/or reception of an electrical signal between an external electronic device (not illustrated) (e.g., the external electronic device 470 of FIG. 4B) and the wearable device 103. In addition, the communication circuitry 515 of the wearable device 103 may include hardware to support transmission and/or reception of an electrical signal between the external electronic devices. The communication circuitry 515 may include, for example, at least one of a MODEM, an antenna, and an optic/electronic (O/E) converter. The communication circuitry 515 may support transmission and/or reception of an electrical signal based on various types of communication means such as Ethernet, Bluetooth (BT), Bluetooth low energy (BLE), ZigBee, long term evolution (LTE), 5G new radio (NR), and wireless-fidelity (Wi-Fi). The communication circuitry 515 of FIG. 5 may include at least a part of the communication module 190 and/or the antenna module 197 of FIG. 1.

The memory 517 of the wearable device 103 according to an embodiment may include a hardware component for storing data and/or instructions inputted to the processor 511 and/or outputted from the processor 511. The memory 517 may include, for example, a volatile memory such as a random-access memory (RAM), and/or a non-volatile memory such as a read-only memory (ROM). The volatile memory may include, for example, at least one of a dynamic RAM (DRAM), a static RAM (SRAM), a Cache RAM, and a pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disk, and an embedded multimedia card (eMMC). The memory 517 of FIG. 5 may include at least a part of the memory 130 of FIG. 1.

Although not illustrated in FIG. 5, the wearable device 103 according to an embodiment may include a sensor and a camera. For example, the wearable device 103 may include the sensor for identifying an input of the user. For example, the sensor may include an IMU (or an IMU sensor), a biometric sensor, an acoustic sensor (or a microphone (or a mic)), a gyro sensor, a gravity sensor, and/or an acceleration sensor. For example, the wearable device 103 may include the camera (or an image sensor) for recognizing a real environment. The sensor may include at least a part of the sensor module 176 of FIG. 1. The camera may include at least a part of the camera module 180 of FIG. 1. In addition, the wearable device 103 according to an embodiment may include an output means for outputting information in another form other than a visualized form. For example, the wearable device 103 may include a speaker for outputting an acoustic signal. For example, the wearable device 103 may include a motor for providing haptic feedback based on vibration.

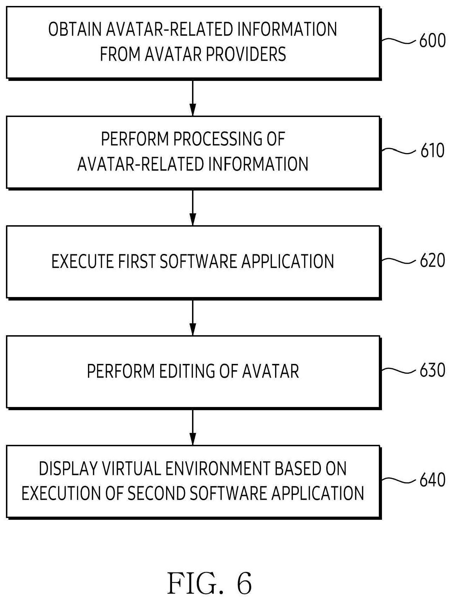

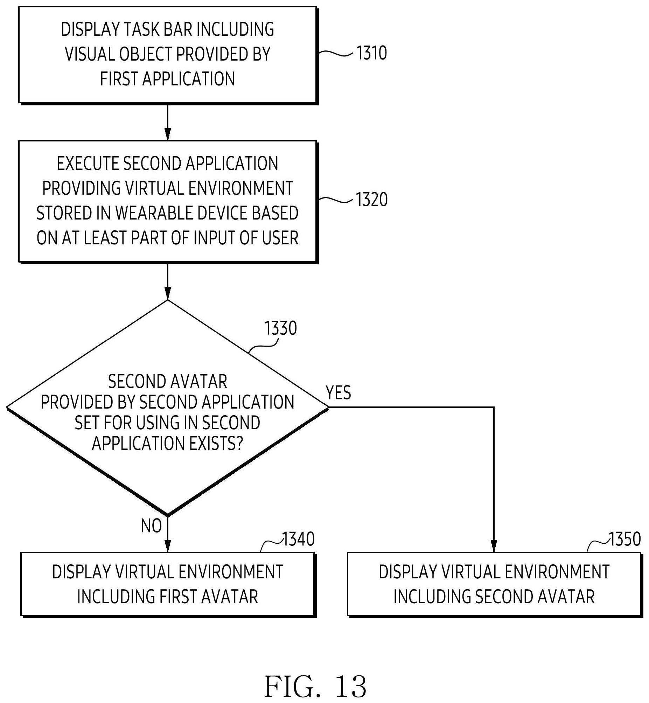

Referring to FIG. 5, in the memory 517 of the wearable device 103 according to an embodiment, one or more instructions (or commands) indicating a calculation and/or an operation to be performed on data by the processor 511 of the wearable device 103 may be stored. A set of one or more instructions may be referred to as a program, firmware, an operating system, a process, a routine, a sub-routine, and/or an application. Hereinafter, an application being installed in an electronic device (e.g., the wearable device 103) may mean that one or more instructions provided in a form of the application are stored in the memory 517, and that the one or more applications are stored in a format (e.g., a file with an extension designated by an operating system of the wearable device 103) executable by the processor of the electronic device. The wearable device 103 according to an embodiment may perform an operation of FIGS. 6 and 13 by executing the one or more instructions stored in the memory 517.

Referring to FIG. 5, the memory 517 of the wearable device 103 according to an embodiment may store avatar information 521 and item information 523. For example, the wearable device 103 may store avatar-related information obtained from each of providers (e.g., the providers 411, 412, 413, and 414 of FIG. 4A). For example, the avatar-related information may include the avatar information 521 and the item information 523. For example, the wearable device 103 may obtain and store first avatar information and first item information from a first provider among the providers. In this case, the first avatar information and the first item information may be stored in a state of being associated with first account information of the first provider. The first avatar information may be included in the avatar information 521, and the first item information may be included in the item information 523. The first avatar information may include information on avatars of a first avatar set provided by the first provider. In addition, for example, the wearable device 103 may obtain and store second avatar information and second item information from a second provider among the providers. In this case, the second avatar information and the second item information may be stored in a state of being associated with second account information of the second provider. The second avatar information may be included in the avatar information 521, and the second item information may be included in the item information 523. The second avatar information may include information on avatars of a second avatar set provided by the second provider.

FIG. 6 illustrates an example of an operation flow for a method of managing avatars obtained from a plurality of providers and displaying the avatar in a software application of a wearable device.

At least a part of the methods of FIG. 6 may be performed by the wearable device 103 of FIG. 5. For example, at least a part of the methods may be controlled by a processor 511 of the wearable device 103. In the following embodiment, each operation may also be sequentially performed, but is not necessarily performed sequentially. For example, an order of each operation may also be changed, and at least two operations may also be performed in parallel.

In operation 600, the wearable device 103 may obtain avatar-related information from avatar providers. Each of the avatar providers (hereinafter, providers) may include at least one of a source application or a source server that provides an avatar. For convenience of description, a case that the providers include a first source application and a second source application is assumed. For example, the wearable device 103 may obtain first avatar-related information from the first source application and obtain second avatar-related information from the second source application. For example, the first avatar-related information may include information for generating a first avatar set provided by the first source application and information for generating a first item set provided by the first source application. In addition, for example, the second avatar-related information may include information for generating a second avatar set provided by the second source application and information for generating a second item set provided by the second source application.

In operation 610, the wearable device 103 may perform processing of the avatar-related information. For example, the wearable device 103 may obtain a scale of the avatar-related information. For example, the wearable device 103 may identify a first scale based on a proportion of the first avatar set provided by the first source application. The first scale may be referred to as a first proportion. For example, the first proportion may include a proportion (or a body proportion) of the first avatar set. The first item set may have the first proportion based on the first scale. Alternatively, for example, the wearable device 103 may identify a second scale based on a proportion of the second avatar set provided by the second source application. The second scale may be referred to as a second proportion. For example, the second proportion may include a proportion (or a body proportion) of the second avatar set. In addition, the second item set may have the second proportion based on the second scale.

According to an embodiment, the wearable device 103 may compare the identified proportion and a designated proportion. For example, the wearable device 103 may compare the designated proportion set in a first software application for merging avatars provided by the providers and the first proportion. Alternatively, for example, the wearable device 103 may compare the designated proportion and the second proportion. In a case that the proportion does not correspond, the wearable device 103 may process the avatar-related information such that the first proportion (or the second proportion) has the designated proportion. Specific content related to this is described in FIGS. 7A to 7C below. As described above, processing of adjusting a proportion of the avatar-related information obtained from the providers by the wearable device 103 to correspond to the designated proportion may be referred to as normalization. Based on the normalization, the wearable device 103 may merge and manage avatars provided by the providers through the first software application.

In operation 620, the wearable device 103 may execute the first software application. For example, the wearable device 103 may execute the first software application based on at least a part of an input to a task bar (e.g., the task bar 420 of FIG. 4A) displaying a global menu of the wearable device 103.

According to an embodiment, the task bar may include a plurality of icons. For example, the plurality of icons may include an icon for a home screen, an icon for providing software applications stored in the wearable device 103, and icons set for quick execution. According to an embodiment, the plurality of icons may include a visual object (e.g., the visual object 421 of FIG. 4A) of the first software application. For example, the icon may include a region for displaying an avatar set among avatars provided by the providers. For example, the first software application may be executed based on an input to the icon. For example, the task bar may be referred to as a device menu, a global menu, or a global setting menu. In other words, the task bar may be used to manage or provide information of the wearable device 103.

According to an embodiment, the wearable device 103 may display a UI (e.g., the UI 430 of FIG. 4A) of the first software application in response to the execution of the first software application. A user interface for displaying and editing an avatar provided by the providers through the first software application may be indicated. For example, the UI may include a first portion (e.g., the first portion 431 of FIG. 4A) that includes a first visual object indicating account information and at least one second visual object indicating a candidate avatar according to the account information. In addition, for example, the UI may include a second portion (e.g., the second portion 432 of FIG. 4A) to provide a preview (or a preview image) of a candidate avatar corresponding to a second visual object selected from among the at least one second visual object based on an input to the first portion. However, an embodiment of the present disclosure is not limited thereto. For example, the UI may also display avatars provided by the providers in an undivided screen. Specific content of the task bar and the UI is described in FIG. 8A below.

In operation 630, the wearable device 103 may perform editing of the avatar. For example, the avatar may be included in avatars provided by the providers. For example, the avatar may be provided by the first source application or the second source application.

For example, the wearable device 103 may change an item worn by the avatar. For example, the wearable device 103 may change an item (or an asset) worn by the avatar based on at least a part of an input of a user to the UI. Alternatively, for example, the wearable device 103 may change the avatar to another avatar. For example, the other avatar may be included in the avatars provided by the providers.

In operation 640, the wearable device 103 may display a virtual environment based on execution of a second software application. For example, the wearable device 103 may execute the second software application that provides the virtual environment. For example, the second software application may indicate a software application stored in the wearable device 103. In other words, unlike the source application of the providers providing the avatars, the second software application may be stored in the wearable device 103.

According to an embodiment, the wearable device 103 may identify a state of the second software application in response to the execution of the second software application. For example, the state may include a first state in which an avatar provided by the second software application set for the second software application exists and a second state different from the first state. For convenience of description, the avatar provided by the second software application may be referred to as an app avatar. For example, the second state may include a case that the app avatar provided by the second software application is not set for the second software application.

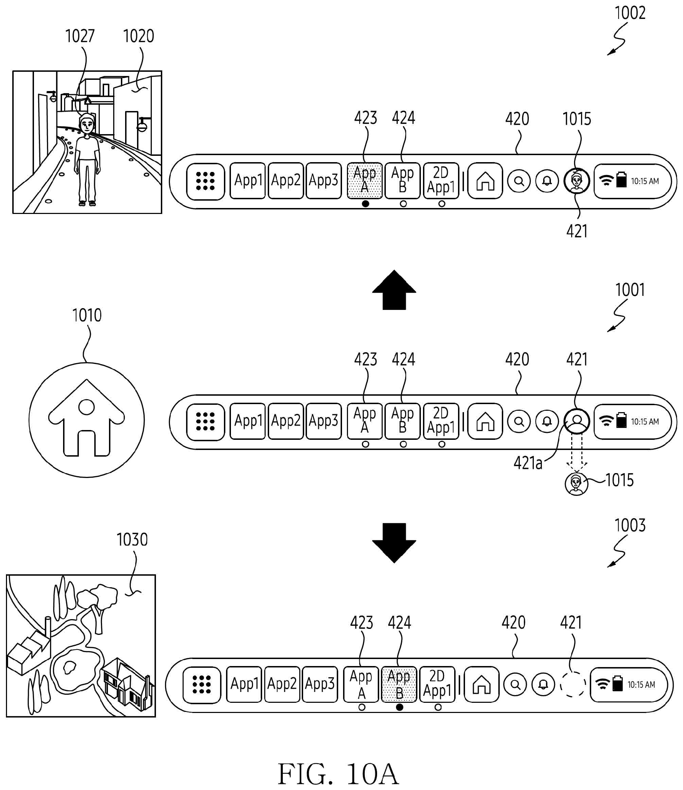

According to an embodiment, the wearable device 103 may display the virtual environment including the app avatar provided by the second software application in the first state. In contrast, the wearable device 103 may display the virtual environment based on an image displayed by the icon of the task bar in the second state. For example, in a case that the icon of the task bar displays an image indicating the avatar provided by the first source application, the wearable device 103 may display the virtual environment including the avatar in the second state. Alternatively, for example, in a case that the icon of the task bar displays a default image different from the avatars provided by the providers, or the display of the icon is deactivated, the wearable device 103 may display a screen for selecting the app avatar provided by the second software application in the second state. For example, the screen may be at least partially superimposed on the virtual environment. Specific content related to this is described in FIGS. 9A and 10A below.

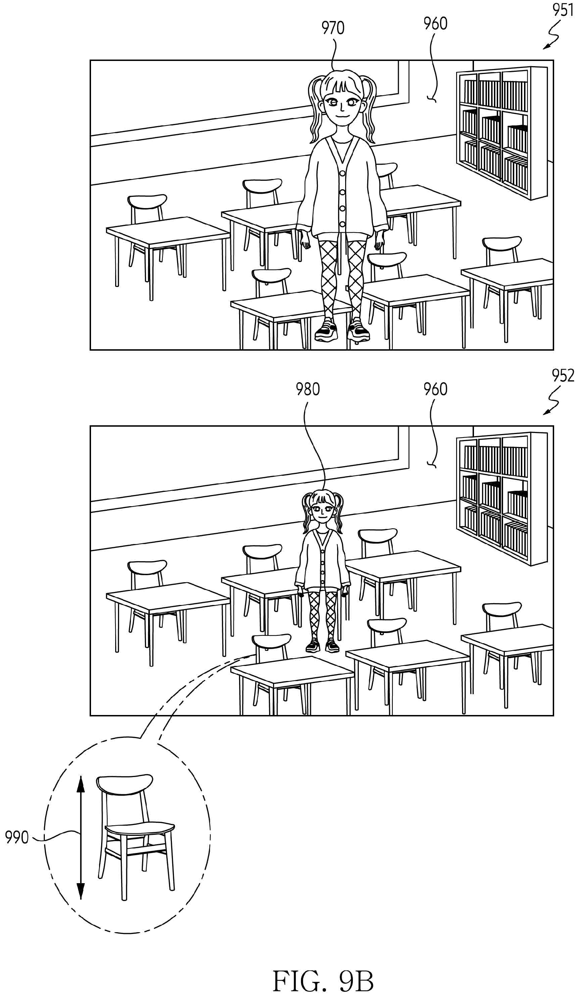

According to an embodiment, in a case of displaying the virtual environment including the avatar, the wearable device 103 may adjust a scale of the avatar. For example, the wearable device 103 may adjust the scale of the avatar to correspond to a scale supported by the second software application. The scale of the avatar may be the designated scale of the first software application. Specific content related to this is described in FIG. 9B below.

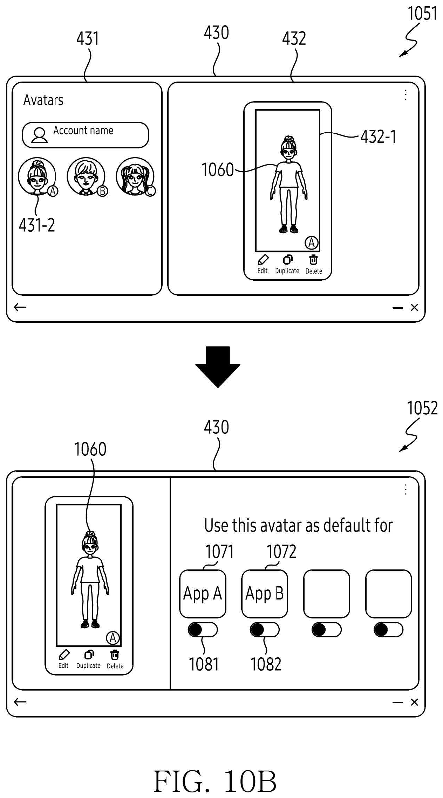

According to an embodiment, the wearable device 103 may set a default avatar applicable to each second software application based on at least a part of an input to the UI. For example, the default avatar may be displayed through the icon. Specific content related to this is described in FIG. 10B below.

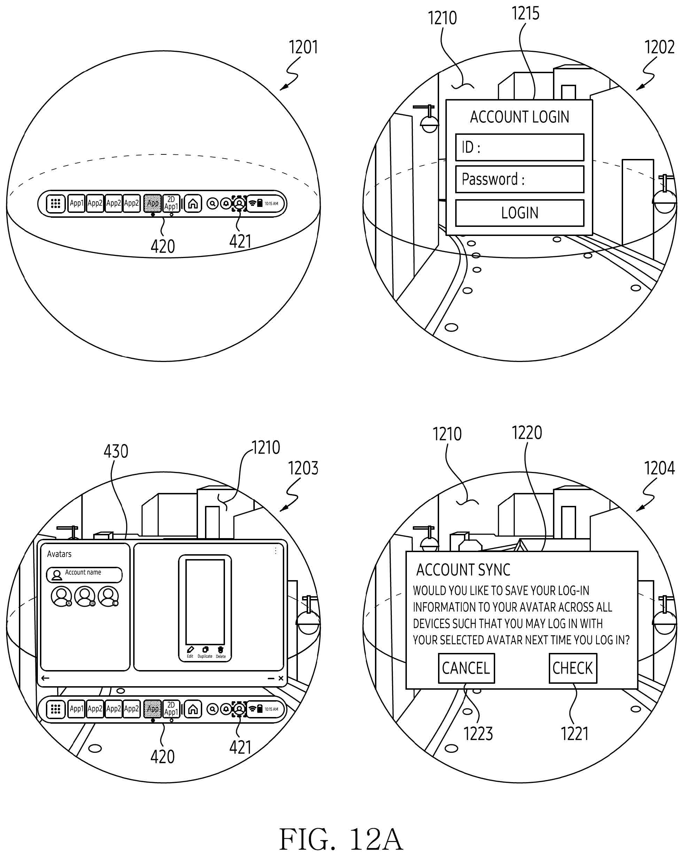

According to an embodiment, the wearable device 103 may perform login for the second software application after executing the second software application. For example, the wearable device 103 may associate the avatar provided by the first source application with log-in information of the user. For example, the wearable device 103 may display a visual object guiding the association between the avatar and the log-in information. In a case that the avatar and the log-in information are associated with each other based on an input to the visual object, the wearable device 103 may perform the login based on the avatar while executing the second software application in which the avatar is set as the default avatar. For example, the wearable device 103 may request, to a server that manages the second software application, authentication for the second software application based on the avatar. Based on a success of the authentication, the wearable device 103 may display the virtual environment including the avatar. Specific content related to this is described in FIG. 12A below.

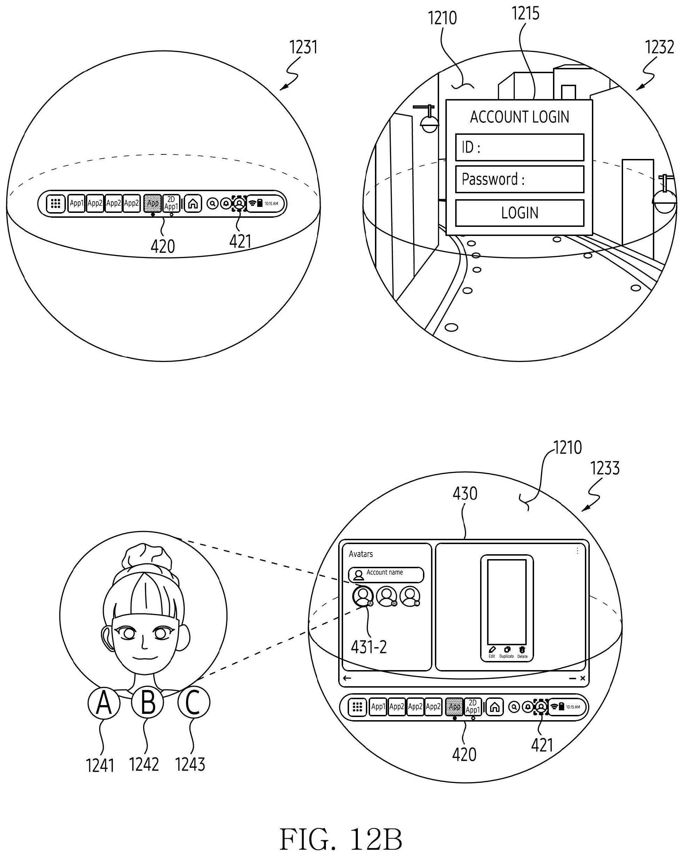

According to an embodiment, the wearable device 103 may display the UI including a visual object displaying a candidate avatar among avatars provided by the providers. In this case, the wearable device 103 may display visual information for notifying a software application with which the candidate avatar corresponding to the visual object is associated, together with the visual object. For example, in an example in which the avatar and the second software application are associated, the wearable device 103 may display the visual information indicating the second software application together with the visual object for the avatar. Specific content related to this is described in FIG. 12B below.

According to an embodiment, the wearable device 103 may display another visual object inquiring whether to perform login of a third software application different from the second software application by using the avatar in which the log-in information of the user is associated. For example, in a case that the avatar is selected as the default avatar and the third software application is executed, the wearable device 103 may display the other visual object. Based on an input to the other visual object, the wearable device 103 may perform the login of the third software application based on the avatar.

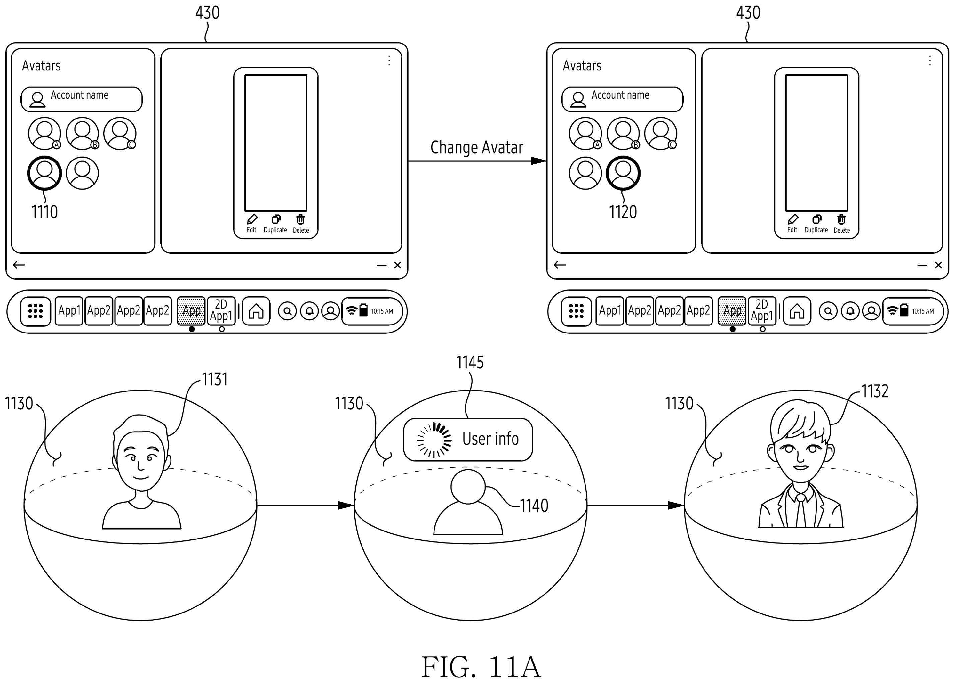

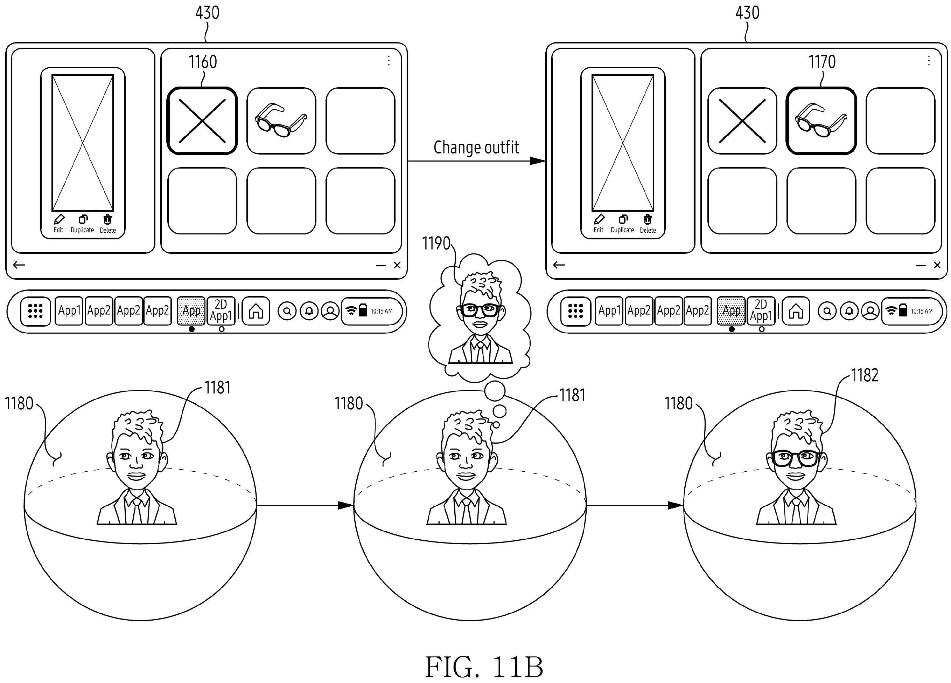

According to an embodiment, the wearable device 103 may perform a change in the avatar while displaying the virtual environment provided by the second software application including the avatar. For example, while displaying the virtual environment, the wearable device 103 may perform a change in the avatar using the UI of the first software application. For example, the change in the avatar may include changing an appearance of the avatar from a first appearance to a second appearance or changing from the avatar to the other avatar. For example, the other avatar may be provided by the second source application among the providers. According to an embodiment, the wearable device 103 may display the virtual environment including a virtual object notifying a change in the avatar. For example, the virtual object may include an image indicating the second appearance to be changed from the first appearance. Alternatively, for example, the virtual object may include a dummy avatar and information on the user. For example, the dummy avatar may be used to notify a change in the avatar. For example, the information on the user may include an account identifier of the user or a name of the user. Specific content related to this is described in FIGS. 11A and 11B below.

FIG. 7A illustrates an example of a method of obtaining avatar-related information from a plurality of providers.

FIG. 7A illustrates an example 700 of a method in which a wearable device 103 obtains the avatar-related information from a source node 410 including a plurality of providers. The wearable device 103 of FIG. 7A may indicate an example of the wearable device 103 of FIG. 5. The source node 410 of FIG. 7A may indicate an example of the source node 410 of FIG. 4.

Referring to the example 700, the wearable device 103 may obtain the avatar-related information from the source node 410. For example, the wearable device 103 may obtain the avatar-related information from each of providers 411, 412, 413, and 414. For example, the first provider 411 may provide information on a first avatar set and information on a first item set to the wearable device 103. For example, the second provider 412 may provide information on a second avatar set and information on a second item set to the wearable device 103. For example, the third provider 413 may provide information on a third avatar set and information on a third item set to the wearable device 103. For example, the fourth provider 414 may provide information on a fourth avatar set and information on a fourth item set to the wearable device 103.

Referring to the example 700, the wearable device 103 may store the avatar-related information obtained from the providers 411, 412, 413, and 414. For example, the wearable device 103 may store the avatar-related information in a state associated with account information of each of the providers 411, 412, 413, and 414. In other words, the wearable device 103 may store the avatar-related information for each account information. For example, the account information may include log-in information or identification information used by each of the providers 411, 412, 413, and 414.

According to an embodiment, the wearable device 103 may perform normalization on the avatar-related information obtained from the providers 411, 412, 413, and 414. The normalization may indicate converting a proportion (or a ratio) of an avatar set by each of the providers 411, 412, 413, and 414 to a designated proportion supported by the first software application of the wearable device 103. For example, the normalization may be referred to as an override.

Referring to an example 710, the wearable device 103 may perform normalization on an avatar. For example, the wearable device 103 may compare an attribute of the first avatar set provided by the first provider 411 and the designated proportion. For example, the attribute may include a size or a proportion of the first avatar set. For example, the wearable device 103 may identify the attribute of the first avatar set through a plane image of the first avatar set. Alternatively, for example, the wearable device 103 may identify the attribute based on data (e.g., a software development kit (SDK)) of information on the first avatar set. The wearable device 103 may divide an avatar 711 of the first avatar set into a plurality of parts (e.g., a head, a body, an arm, and a leg). The wearable device 103 may adjust a proportion and a size of each of the plurality of parts of the avatar 711 to match the designated proportion. In addition, for example, the wearable device 103 may compare an attribute of the second avatar set provided by the second provider 412 and the designated proportion. For example, the attribute may include a size or a proportion of the second avatar set. The wearable device 103 may divide an avatar 713 of the second avatar set into a plurality of parts (e.g., a head, a body, an arm, and a leg). The wearable device 103 may adjust a proportion and a size of each of the plurality of parts of the avatar 713 to match the designated proportion.

Referring to the example 710, the wearable device 103 may enlarge the avatar 711 to an avatar 712 having the designated proportion. The wearable device 103 may reduce the avatar 713 to the avatar 712 having the designated proportion. Accordingly, the avatar 711 and the avatar 713 having the adjusted proportion may be formed to correspond to the designated proportion provided in the first software application and have a natural motion.

Referring to an example 720, the wearable device 103 may perform normalization on an item. For example, the wearable device 103 may compare an attribute of the first item set provided by the first provider 411 and the designated proportion. For example, the attribute may include a size or a proportion of the first item set. For example, the wearable device 103 may identify the attribute of the first item set through a plane image of the first item set. Alternatively, for example, the wearable device 103 may identify the attribute based on data (e.g., a software development kit (SDK)) of information on the first item set. The wearable device 103 may divide an item 721 of the first item set into fixed regions (e.g., a sleeve portion and a body portion of a top) or deformable regions. The wearable device 103 may adjust a proportion and a size of each of the regions of the item 721 to match the designated proportion. In addition, for example, the wearable device 103 may compare an attribute of the second item set provided by the second provider 412 and the designated proportion. For example, the attribute may include a size or a proportion of the second item set. The wearable device 103 may divide an item 723 of the second item set into a plurality of regions. The wearable device 103 may adjust a proportion and a size of each of the plurality of regions of the item 723 to match the designated proportion.

Referring to the example 720, the wearable device 103 may enlarge the item 721 to an item 722 having the designated proportion. The wearable device 103 may reduce the item 723 to the item 722 having the designated proportion. Accordingly, the item 721 and the item 723 having the adjusted proportion may correspond to the designated proportion provided in the first software application and may be applied to an avatar having the designated proportion.

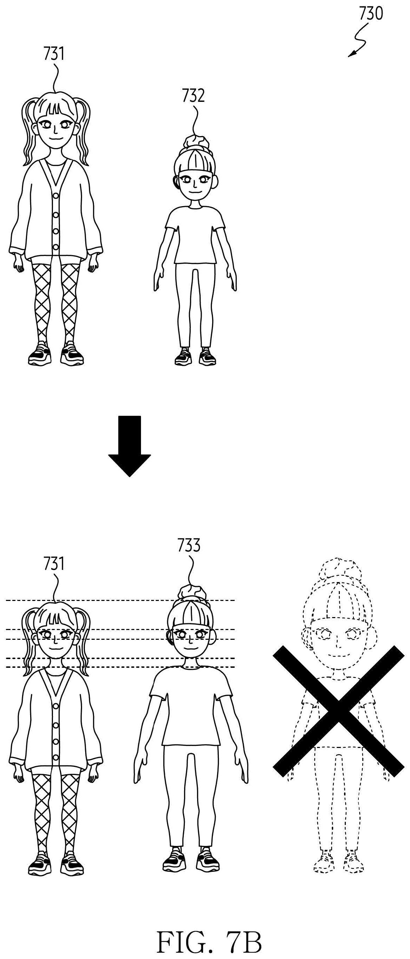

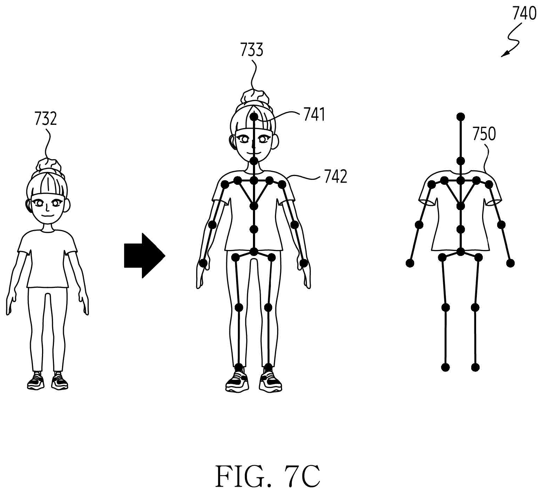

FIGS. 7B and 7C illustrate examples of a method of performing processing of avatar-related information.

FIGS. 7B and 7C illustrate examples 730 and 740 performing normalization on the avatar-related information.

The example 730 illustrates an avatar 731 having a designated proportion provided by the first software application and an avatar 732 having a proportion different from the designated proportion. The avatar 732 may have the proportion of an avatar provided by a provider (e.g., a source application) that provides the avatar-related information to the wearable device 103. The wearable device 103 may recognize that the proportion identified based on the avatar-related information for generating the avatar 732 is different from the designated proportion. Accordingly, the wearable device 103 may adjust the avatar 732 having the proportion to an avatar 733 having the designated proportion. In this case, the avatar 733 may be generated by adjusting a proportion of a plurality of parts (e.g., a head, an upper body, and a lower body) of the avatar 732, respectively, and applying a motion (or a facial expression) corresponding to each of the parts. Referring to the example 730, in adjusting the avatar 732 to the avatar 733, other than simply enlarging the proportion of the avatar 732 to the designated proportion of the avatar 731, a proportion of the plurality of parts forming the avatar 732 may be adjusted, respectively.

Referring to the example 740, as a plurality of joints 741 and 742 included in the avatar 732 are adjusted, the avatar 733 may be generated. For example, as a position of the plurality of joints 741 and 742 of the avatar 732 and the number of the plurality of joints 741 and 742 are adjusted, the avatar 733 may be generated. The plurality of joints 741 and 742 may indicate virtual joints. For example, the wearable device 103 may generate a designated proportion (or a designated scale) of an avatar as a reference for compatibility with the first software application. The wearable device 103 may generate a skeleton for a plurality of parts based on the designated proportion and designate the number and a position of the plurality of joints 741 and 742 in the skeleton. The wearable device 103 may adjust the avatar 732 to the avatar 733 by adjusting the plurality of joints 741 and 742 of the avatar 732 to correspond to the number and the position of the plurality of joints 741 and 742 of the designated proportion. In this way, the wearable device 103 may adjust a proportion for an item 750. The number and the position of the plurality of joints 741 and 742 according to the designated proportion and the designated proportion may be stored in the first software application.

FIG. 8A illustrates examples of a user interface of a first software application for merging avatars.

FIG. 8A illustrates examples 801 and 802 of a UI 430 of the first software application. The UI 430 may be displayed via a display 513 of a wearable device 103. For example, the UI 430 may be superimposed on a virtual environment. For example, the virtual environment may be provided by a second software application stored in the wearable device 103. However, an embodiment of the present disclosure is not limited thereto. In a case that the virtual environment is not displayed (e.g., while a home screen is displayed), the UI 430 may be displayed in at least a part of a display region of the display 513.

Referring to the example 801, the wearable device 103 may display a task bar 420. For example, the task bar 420 may include a plurality of icons. For example, the plurality of icons may include an icon 422 for providing software applications stored in the wearable device 103 and icons set for quick execution. For example, the task bar 420 may include a visual object 421 provided by the first software application. Among the icons set for quick execution, an icon 423 of a currently executing software application may be activated. For example, the software application related to the icon 423 may provide a virtual environment. The wearable device 103 may display the UI 430 based on an input to the visual object 421.

Referring to the example 801, the UI 430 may include a first portion 431 and a second portion 432. For example, the first portion 431 may include a first visual object 431-1 indicating account information and at least one second visual object 431-2 indicating a candidate avatar according to the account information. For example, the account information may represent account information used in a source application or for indicating the source application. The second visual object 431-2 may be used to display candidate avatars provided by the source application indicated by the first visual object 431-1. For example, visual information 431-3 at least partially superimposed on the second visual object 431-2 may indicate a second software application associated (or linked) with the second visual object 431-2. The second software application may indicate an application stored in the wearable device 103 providing a virtual environment. For example, the visual information 431-3 may indicate the second software application App A.

For example, the second portion 432 may be used to display an avatar 810 of the selected second visual object 431-2. For example, the second portion 432 may include a region 432-1 for displaying the avatar 810, icons 432-2 for editing the avatar 810, and visual information 432-3. For example, the second portion 432 may provide a preview for the avatar 810 through the region 432-1. The preview may display an avatar adjusted (or reconstructed) at the designated proportion of the first software application. For example, the preview may provide a motion of an avatar to be applied by tracking a motion of a user. For example, the visual information 432-3 may be understood substantially the same as the visual information 431-3. For example, the icons 432-2 may include an icon for a function such as editing, copying, or deleting. For example, the editing function may provide an item (or an asset) provided by another provider (e.g., a second source application) in addition to a provider (e.g., a first source application) that provides the avatar 810. In order to apply the item of the other provider to the avatar 810, the item of the other provider and an item of the provider may be adjusted at the designated proportion. The example 801 of FIG. 8A is merely an example for convenience of description, and an embodiment of the present disclosure is not limited thereto. The number or a shape of an icon, a visual object, and visual information included in the example 801 may be changed.

Referring to the example 802, the wearable device 103 may display the UI 430. In the example 802, the wearable device 103 omitted the task bar 420, but the wearable device 103 may also display the task bar 420 together. Referring to the UI 430 of the example 802, the UI 430 may display a visual object 821 indicating account information and at least one visual object 822 providing a preview for a candidate avatar. For example, the visual object 821 may be understood substantially the same as the first visual object 431-1 of the example 801. For example, the visual object 822 may provide a preview for the candidate avatar according to the account information. The visual object 822 may include visual information 822-1. For example, the visual information 822-1 may indicate a second software application in which the candidate avatar corresponding to the visual object 822 is associated (or linked). Referring to the example 802, the UI 430 may display a candidate avatar according to account information selected by the visual object 821, through the visual object 822. However, an embodiment of the present disclosure is not limited thereto. For example, the UI 430 may display avatars provided by all accounts (i.e., source applications) through the visual object 822.

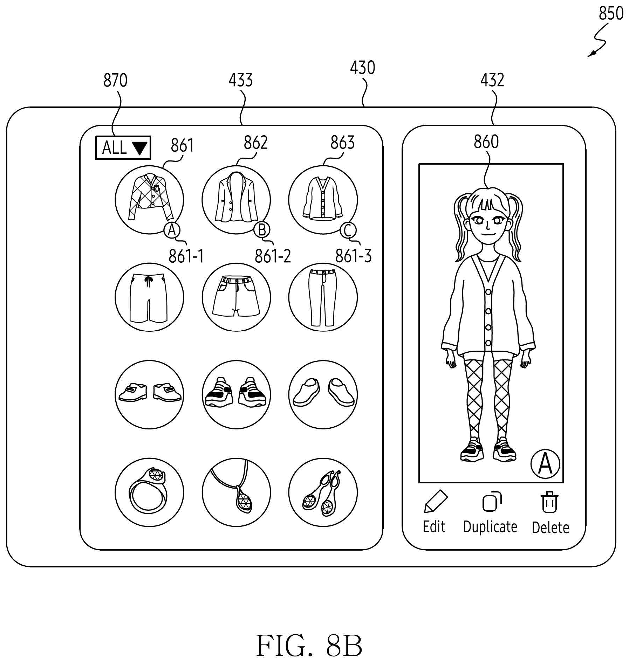

FIG. 8B illustrates an example of a method of editing an avatar through a first software application.

FIG. 8B illustrates an example 850 of the UI 430 of the first software application. The UI 430 may be displayed via the display 513 of the wearable device 103.

Referring to the example 850, the wearable device 103 may display the UI 430. In the example 850, omitted the task bar 420 is omitted, but it may be understood that the wearable device 103 displays the task bar 420. For example, the UI 430 may be superimposed on a virtual environment. For example, the virtual environment may be provided by a second software application stored in the wearable device 103. However, an embodiment of the present disclosure is not limited thereto. In a case that the virtual environment is not displayed (e.g., while a home screen is displayed), the UI 430 may be displayed in at least a part of a display region of the display 513.

Referring to the example 850, the UI 430 may include a second portion 432 and a third portion 433. For example, the second portion 432 may provide a preview for an avatar 860. For example, the avatar 860 may be displayed based on an input to a first portion (not illustrated) (e.g., the first portion 431 of FIG. 8A) or an input to a visual object (not illustrated) (e.g., the visual object 822 of FIG. 8A). The third portion 433 may display a candidate item to be applied to the avatar 860. For example, the third portion 433 may include a first item 861, a second item 862, and a third item 863. The number and a shape of items illustrated in the example 850 of FIG. 8B are merely an example, and an embodiment of the present disclosure is not limited thereto. For example, the third portion 433 may be displayed based on an input to an icon (e.g., the icon 432-2 of FIG. 8A) for editing the avatar 860. For example, the third portion 433 may display visual information 861-1, 861-2, and 861-3 on a provider providing an item. For example, the visual information 861-1 may indicate a first provider (or a first source application) that provides the first item 861. In addition, for example, the visual information 861-2 may indicate a second provider (or a second source application) that provides the second item 862. In addition, for example, the visual information 861-3 may indicate a third provider (or a third source application) that provides the third item 863. For example, the third portion 433 may include an icon 870 for filtering a provider. For example, the icon 870 may be used to classify an item for each provider. Alternatively, for example, the icon 870 may be used to classify a type (or a kind) of an item. For example, the type may include an accessory, a top, a bottom, a shoe, or looks. For example, the looks may include an eye shape, an eyebrow shape, a skin color, a face shape, and a mouth shape.

FIG. 9A illustrates an example of a method of displaying a virtual environment provided by a second software application.

FIG. 9A illustrates examples 901 and 902 of displaying a virtual environment provided by the second software application. The second software application may include an application stored in a wearable device 103.

Referring to the example 901, the wearable device 103 may display a task bar 420. For example, the task bar 420 may include a plurality of icons. For example, the plurality of icons may include an icon for providing software applications stored in the wearable device 103 and icons set for quick execution. For example, the task bar 420 may include a visual object 421 provided by the first software application. Among the icons set for quick execution, an icon 913 of a currently executing second software application App A may be activated. For example, the second software application App A may provide a virtual environment 915. The wearable device 103 may display the virtual environment 915 based on an input to the icon 913. For example, the virtual environment 915 may include an avatar 917. In this case, the second software application App A may be an application supporting display of an avatar. In the example 901, a case that the avatar 917 is an avatar provided by the first software application is assumed. For example, the visual object 421 of the task bar 420 may provide a preview 910 for the avatar 917. For example, the visual object 421 may include the preview 910 corresponding to the avatar 917 through a region of the visual object 421. Referring to the above description, the wearable device 103 may provide information on the avatar 917 included in the virtual environment 915 provided by the executing second software application App A through the preview 910 of the task bar 420.

Referring to the example 902, the wearable device 103 may display the task bar 420. For example, the task bar 420 may include a plurality of icons. For example, the plurality of icons may include an icon for providing software applications stored in the wearable device 103 and icons set for quick execution. Among the icons set for quick execution, an icon 923 of a currently executing second software application App B may be activated. For example, the second software application App B may provide a virtual environment 925. The wearable device 103 may display the virtual environment 925 based on an input to the icon 923. In this case, the second software application App B may be an application without supporting display of an avatar. While the second software application App B without supporting display of an avatar is being executed, the task bar 420 may deactivate display of the visual object 421 of the first software application. However, an embodiment of the present disclosure is not limited thereto. For example, the task bar 420 displays the visual object 421, but may display a default image 421a through the region of the visual object 421. For example, the default image 421a may indicate an image different from avatars provided by the first software application. For example, the default image 421a may include a simplified image of a human shape.

FIG. 9B illustrates an example of a method of processing an avatar displayed in a virtual environment provided by a second software application.

FIG. 9B illustrates examples 951 and 952 of a method of processing an avatar displayed in a virtual environment provided by the second software application. The second software application may include an application stored in the wearable device 103.

Referring to the example 951, the wearable device 103 may display a virtual environment 960. For example, the wearable device 103 may display the virtual environment 960 in response to execution of the second software application. The virtual environment 960 may include an avatar 970. For example, the avatar 970 may have a designated proportion. For example, the designated proportion may be a proportion set in the first software application of the wearable device 103. Referring to the example 951, the avatar 970 having the designated proportion may be different from a proportion of objects of the virtual environment 960. In a case that the virtual environment 960 including the avatar 970 is displayed, a user may experience a sense of heterogeneity. Accordingly, the wearable device 103 is required to adjust the designated proportion and a proportion of the virtual environment 960 provided by the second software application.

Referring to the example 952, the wearable device 103 may display the virtual environment 960 including an avatar 980 adjusted from the designated proportion to the proportion of the virtual environment 960. For example, the wearable device 103 may identify a proportion 990 of an object (e.g., a space or an item) provided by the second software application and change a scale (or a body proportion) of the avatar 980 to correspond to the proportion 990 from the designated proportion based on the identified proportion 990. Alternatively, for example, the wearable device 103 may identify the proportion 990 requested in installation information of the second software application and change the scale of the avatar 980 to correspond to the proportion 990 from the designated proportion. For example, the wearable device 103 may adjust a part (e.g., a hand, a head, a foot, and the like) that requires delicate interaction among body parts of the avatar 980 to the proportion 990 of the object or the proportion 990 requested through the installation information. In this case, even though the avatar 980 is adjusted from the designated proportion to the proportion 990, the number and a position of virtual joints in a skeleton of the avatar 980 may be applied identically.

FIG. 10A illustrates an example of a method of displaying an avatar merged in a first software application based on a state of a second software application.

FIG. 10A illustrates examples 1001, 1002, and 1003 of a method of displaying an avatar provided by the first software application based on a state of the second software application. The second software application may indicate an application stored in a wearable device 103. For example, the state of the second software application may include a first state using an avatar (or an app avatar) provided by the second software application, and a second state different from the first state. For example, the second state may include a case that the app avatar provided by the second software application is absent or is not used.

Referring to the example 1001, the wearable device 103 may display a home screen 1010. For example, the home screen 1010 may indicate a main screen provided by the wearable device 103. For example, the home screen 1010 may include a task bar 420. For example, the task bar 420 may include a visual object 421 provided by the first software application, an icon 423 of a second software application App A, and an icon 424 of a second software application App B. While the home screen 1010 is displayed, the icon 423 and the icon 424 may be deactivated. The visual object 421 may display a default image 421a.

According to an embodiment, the wearable device 103 may select a preview 1015 for an avatar 1027 based on at least a part of an input to the visual object 421. For example, the wearable device 103 may change from the default image 421a to the preview 1015 for the avatar 1027 based on at least a part of the input to the visual object 421. The visual object 421 displaying the preview 1015 may indicate that the avatar 1027 corresponding to the preview 1015 is used as a default avatar for second software applications. For example, the default avatar may indicate an avatar used in the second software application App A in a case that the second software application App A is executed.

Referring to the example 1002, the wearable device 103 may execute the second software application App A. For example, the wearable device 103 may execute the second software application App A based on an input to the icon 423 of the second software application App A. As the second software application App A is executed, the icon 423 may be activated. The icon 423 being activated may include display of a visual effect. For example, the wearable device 103 may check a state of the second software application App A. For example, the wearable device 103 may display a virtual environment 1020 including an app avatar provided by the second software application App A based on identifying the first state. In contrast, the wearable device 103 may check an image displayed by the visual object 421 based on identifying the second state. For example, in a case that the visual object 421 displays the preview 1015, the wearable device 103 may display the virtual environment 1020 including the avatar 1027 corresponding to the preview 1015. Alternatively, for example, in a case that the visual object 421 displays the default image 421a, the wearable device 103 may display a screen for selecting the app avatar provided by the second software application App A. In this case, the second software application App A may indicate an application supporting display of an avatar.

Referring to the example 1003, the wearable device 103 may execute the second software application App B. For example, the wearable device 103 may execute the second software application App B based on an input to the icon 424 of the second software application App B. As the second software application App B is executed, the icon 424 may be activated. The icon 424 being activated may include display of a visual effect. In this case, the second software application App B may indicate an application without supporting display of an avatar. The wearable device 103 may display a virtual environment 1030 in response to the execution of the second software application App B. The wearable device 103 may deactivate the display of the visual object 421 while displaying the virtual environment 1030. However, an embodiment of the present disclosure is not limited thereto. For example, the task bar 420 displays the visual object 421, but may display the default image 421a through the region of the visual object 421. For example, the default image 421a may indicate an image different from avatars provided by the first software application. For example, the default image 421a may include a simplified image of a human shape.

FIG. 10B illustrates an example of a method of setting a default avatar for each second software application.

FIG. 10B illustrates examples 1051 and 1052 of a method of setting a default avatar for each second software application. The default avatar may indicate an avatar used in a second software application App X in a case that the second software application App X is executed.

Referring to the example 1051, the wearable device 103 may display a UI 430 for the first software application. For example, the UI 430 may include a first portion 431 and a second portion 432. For example, the first portion 431 may display at least one second visual object 431-2 indicating a candidate avatar. For example, in a case that the second visual object 431-2 is selected, the second portion 432 may include a region 432-1 for displaying an avatar 1060. For example, the region 432-1 may be used to provide a preview for the avatar 1060.

Referring to the example 1052, based on an input to the region 432-1, the UI 430 including a screen for setting the default avatar may be displayed. The UI 430 including the screen of the example 1052 may include a preview for the avatar 1060, icons 1071 and 1072 indicating the second software application, and toggles 1081 and 1082 for setting the default avatar. For example, the icons 1071 and 1072 and the toggles 1081 and 1082 may be used to set the default avatar for the avatar 1060. For example, each of the icons 1071 and 1072 may indicate an icon of the second software application stored in the wearable device 103. For example, the icon 1071 may indicate an icon of the second software application App A, and the icon 1072 may indicate an icon of the second software application App B. For example, the toggle 1081 may be used to activate or deactivate setting the avatar 1060 as the default avatar for the second software application App A. For example, the toggle 1082 may be used to activate or deactivate setting the avatar 1060 as the default avatar for the second software application App B. For example, the wearable device 103 may identify an input to the toggle 1081 (or the toggle 1082) and activate or deactivate setting of the default avatar based on the input. In a case that executing the second software application App A in which the avatar 1060 is set as the default avatar, the wearable device 103 may display a virtual environment provided by the second software application App A including the avatar 1060.

FIGS. 11A and 11B illustrate examples of a virtual object displayed in a virtual environment while at least a part of an avatar is changed.

FIG. 11A illustrates an example of a virtual object displayed in a virtual environment 1130 while changing an avatar to another avatar. FIG. 11B illustrates an example of a virtual object displayed in a virtual environment 1180 while changing a part (e.g., an appearance) of an avatar.

Referring to FIG. 11A, a wearable device 103 may change a second visual object 1110 indicating a first avatar 1131 to a second visual object 1120 indicating a second avatar 1132 based on an input to a UI 430 of the first software application. For example, the wearable device 103 may identify the input with respect to the UI 430 displaying the second visual object 1110 indicating the first avatar 1131, which is a candidate avatar. The input may include an input to the second visual object 1120 indicating the second avatar 1132. Based on the input, while the second visual object 1110 indicating the first avatar 1131 is changed to the second visual object 1120 indicating the second avatar 1132, the wearable device 103 may display the virtual environment 1130. In a case that the second visual object 1110 indicating the first avatar 1131 is selected, the wearable device 103 may display the virtual environment 1130 including the first avatar 1131. In a case that the second visual object 1120 is identified (or selected) based on the input, the wearable device 103 may display the virtual environment 1130 including a dummy avatar 1140 and information 1145 on a user. The dummy avatar 1140 and the information 1145 on the user may be referred to as the virtual object. The dummy avatar 1140 may be used to notify the change of the first avatar 1131 in the virtual environment 1130. The information 1145 on the user may include account information of the user. The account information may include account information or an ID of the user of the second software application providing the virtual environment 1130. The wearable device 103 may display the virtual environment 1130 including the second avatar 1132 based on an input for applying the second visual object 1120. The input for applying the second visual object 1120 may include an input to the UI 430.

Referring to FIG. 11B, the wearable device 103 may change from an icon 1160 indicating an item to be worn by an avatar to an icon 1170 indicating another item based on an input to the UI 430 of the first software application. For example, the wearable device 103 may obtain the input to the icon 1170 indicating glasses. Accordingly, the wearable device 103 may deactivate the icon 1160 indicating that an accessory is not worn and activate the icon 1170. Based on the input, while being changed from the icon 1160 to the icon 1170, the wearable device 103 may display the virtual environment 1180. In a case that the icon 1160 is selected, the wearable device 103 may display the virtual environment 1180 including an avatar 1181 not wearing an accessory. The avatar 1181 not wearing an accessory may have a first appearance. In a case that the icon 1170 is identified (or selected) based on the input, the wearable device 103 may display the virtual environment 1180 including an image 1190 indicating a second appearance to be changed together with the avatar 1181. The image 1190 may be referred to as the virtual object. The wearable device 103 may display the virtual environment 1180 including an avatar 1182 wearing glasses based on an input for applying an item according to the icon 1170 to the avatar 1181. The avatar 1182 wearing glasses may have the second appearance. The input for applying the icon 1170 may include an input to the UI 430.

FIGS. 12A to 12C illustrate examples of a method of using a second software application through log-in information associated with an avatar of a first software application.

FIGS. 12A to 12C illustrate examples of a method of using the second software application through log-in information associated with the avatar of the first software application. The avatar of the first software application may be included in avatars obtained from providers (e.g., a source application).

Referring to an example 1201 of FIG. 12A, a wearable device 103 may display a home screen. For example, the home screen may indicate a main screen provided by the wearable device 103. For example, the wearable device 103 may display the home screen including a task bar 420. However, an embodiment of the present disclosure is not limited thereto. For example, the wearable device 103 may activate or deactivate display of the task bar 420 based on a designated input or a designated gesture.

Referring to an example 1202, the wearable device 103 may display a virtual environment 1210. For example, the wearable device 103 may display the virtual environment 1210 based on execution of the second software application App A. For example, the virtual environment 1210 may display a screen 1215 for login. For example, the screen 1215 may include a visual object for entering an ID and a password for login of the second software application App A that provides the virtual environment 1210. For example, the screen 1215 may be at least partially superimposed on the virtual environment 1280.

Referring to an example 1203, the wearable device 103 may display a UI 430 of the first software application while displaying the virtual environment 1210. For example, the wearable device 103 may display the UI 430 based on an input to a visual object 421 of the task bar 420.

According to an embodiment, a user may select an avatar in the UI 430. For example, the wearable device 103 may obtain the selected avatar in the UI 430 based on an input of the user. The selected avatar may indicate an avatar to be used by the user in the second software application App A.

Referring to an example 1204, the wearable device 103 may display a visual notification 1220 guiding to associate the selected avatar with log-in information of the user based on obtaining the selected avatar. For example, after obtaining the selected avatar, the wearable device 103 may display the visual notification 1220 based on an input to an icon (not illustrated) requesting to associate log-in information. For example, the visual notification 1220 may include a text inquiring whether to perform login by associating the log-in information with the selected avatar, a visual object 1221 approving the association, and a visual object 1223 rejecting the association.

For example, the log-in information may include the ID and the password for login of the second software application App A. Alternatively, for example, the log-in information may include an ID and a password for login of a plurality of second software applications (e.g., App A and App B). The log-in information for login of the plurality of second software applications may be referred to as single sign-on (SSO) information or merged log-in information.

According to an embodiment, the wearable device 103 may perform login of the second software application App A using the selected avatar based on an input to the visual object 1221. For example, the wearable device 103 may request an authentication to a server that manages the second software application App A in response to obtaining the selected avatar from the first software application after the selected avatar is associated with the log-in information. In an example, the second software application App A may be in the second state. In other words, the second state may correspond to a state that an app avatar provided by the second software application App A is not be set (or used). For example, the wearable device 103 may display the virtual environment 1210 including the selected avatar based on the authentication being succeed. For example, the wearable device 103 may display the screen 1215 in a case that the authentication fails.

Referring to an example 1231 of FIG. 12B, the wearable device 103 may display a home screen. For example, the home screen may indicate a main screen provided by the wearable device 103. For example, the wearable device 103 may display the home screen including the task bar 420. However, an embodiment of the present disclosure is not limited thereto. For example, the wearable device 103 may activate or deactivate display of the task bar 420 based on a designated input or a designated gesture.

Referring to an example 1232, the wearable device 103 may display the virtual environment 1210. For example, the wearable device 103 may display the virtual environment 1210 based on execution of the second software application App A. For example, the virtual environment 1210 may display a screen 1215 for login. For example, the screen 1215 may include a visual object for entering an ID and a password for login of the second software application App A that provides the virtual environment 1210. For example, the screen 1215 may be at least partially superimposed on a virtual environment 1280.

Referring to an example 1233, the wearable device 103 may display the UI 430 of the first software application while displaying the virtual environment 1210. For example, the wearable device 103 may display the UI 430 based on an input to the visual object 421 of the task bar 420.

According to an embodiment, the user may select an avatar in the UI 430. For example, the wearable device 103 may obtain the selected avatar in the UI 430 based on an input of the user. The selected avatar may indicate an avatar to be used by the user in the second software application App A. For example, the wearable device 103 may obtain the selected avatar based on the input to a second visual object 431-2 for the selected avatar.

For example, the wearable device 103 may display visual information 1241, 1242, and 1243, together with the second visual object 431-2 for the selected avatar. For example, the visual information 1241, 1242, and 1243 may indicate a second software application associated with the selected avatar. For example, the visual information 1241 may include a text (e.g., A) indicating the second software application App A. In addition, for example, the visual information 1242 may include a text (e.g., B) indicating the second software application App B. In addition, for example, the visual information 1243 may include a text (e.g., C) indicating a second software application App C. However, an embodiment of the present disclosure is not limited thereto. For example, in a case that the selected avatar is associated with all second software applications, the visual information may indicate all second software applications and may include a text (e.g., ALL) representing indicating all second software applications.

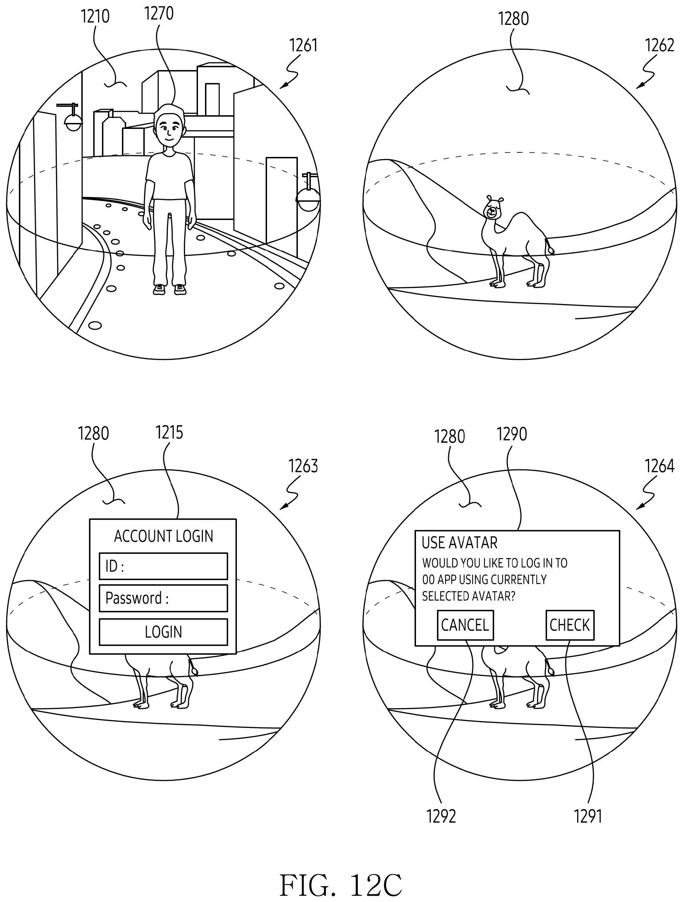

Referring to an example 1261 of FIG. 12C, the wearable device 103 may display the virtual environment 1210. For example, the wearable device 103 may display the virtual environment 1210 based on execution of the second software application App A. For example, the virtual environment 1210 may include an avatar 1270. For example, the avatar 1270 may be an avatar of the first software application. In this case, the avatar 1270 may be associated with log-in information of the second software application App A and the second software application App B through the first software application.

Referring to an example 1262, the wearable device 103 may cease the display of the virtual environment 1210 based on termination of the second software application App A. In addition, the wearable device 103 may display the virtual environment 1280 based on execution of the second software application App A. Referring to an example 1263, the wearable device 103 may display the screen 1215 for login of the second software application App B after displaying the virtual environment 1280. For example, the screen 1215 may be at least partially superimposed on the virtual environment 1280.

Referring to an example 1264, the wearable device 103 may display a visual notification 1290 based on identifying that the avatar 1270 is associated with the second software application App B. For example, the visual notification 1290 may be at least partially superimposed on the virtual environment 1280. For example, the visual notification 1290 may be displayed while the virtual environment 1280 is displayed. For example, the visual notification 1290 may include a text inquiring whether to log in to a currently executed app (e.g., the second software application App B) through the selected avatar (e.g., the avatar 1270), a visual object 1291 for approval, and a visual object 1293 for rejection. For example, the wearable device 103 may display the virtual environment 1280 including the avatar 1270 based on an input to the visual object 1291. In contrast, the wearable device 103 may display the virtual environment 1280 based on an input to the visual object 1293, and display a screen for selecting an app avatar provided by the second software application App B.

FIG. 13 illustrates an example of an operation flow of a method in which a wearable device manages avatars obtained from a plurality of providers and displays the avatar in a software application of the wearable device.

At least a part of the methods of FIG. 13 may be performed by the wearable device 103 of FIG. 5. For example, at least a part of the methods may be controlled by a processor 511 of the wearable device 103. In the following embodiment, each operation may also be sequentially performed, but is not necessarily performed sequentially. For example, an order of each operation may also be changed, and at least two operations may also be performed in parallel.

In operation 1310, the wearable device 103 may display the task bar (e.g., the task bar 420 of FIG. 4A) including a visual object provided by a first application for using avatars provided by a plurality of applications in an application stored in the wearable device 103. The first application may be used to merge (or be compatible with) avatars provided by the plurality of applications. The plurality of applications may indicate source applications.

For example, the wearable device 103 may execute the first application. For example, the wearable device 103 may execute the first application based on at least a part of an input to the task bar displaying a global menu of the wearable device 103.

According to an embodiment, the task bar may include a plurality of icons. For example, the plurality of icons may include an icon for a home screen, an icon for providing software applications stored in the wearable device 103, and icons set for quick execution. According to an embodiment, the task bar may include a visual object (e.g., the visual object 421 of FIG. 4A) provided by the first software application. For example, the visual object may include a region for displaying an avatar set among avatars provided by the plurality of applications. For example, the first application may be executed based on an input to the visual object. For example, the task bar may be referred to as a device menu, a global menu, or a global setting menu. In other words, the task bar may be used to manage or provide information of the wearable device 103.

According to an embodiment, the visual object may indicate a first avatar among the avatars. For example, the first avatar may be provided by a specific source application (e.g., a first source application) among the plurality of applications.

According to an embodiment, the wearable device 103 may display a UI (e.g., the UI 430 of FIG. 4A) of the first application in response to execution of the first application. A user interface for displaying and editing the avatars provided by the plurality of applications may be indicated through the first application. For example, the UI may include a first portion (e.g., the first portion 431 of FIG. 4A) that includes a first visual object indicating account information and at least one second visual object indicating a candidate avatar according to the account information. In addition, for example, the UI may include a second portion (e.g., the second portion 432 of FIG. 4A) to provide a preview (or a preview image) of a candidate avatar corresponding to a second visual object selected from among the at least one second visual object based on an input to the first portion. However, an embodiment of the present disclosure is not limited thereto. For example, the UI may also display avatars provided by the plurality of applications in an undivided screen.

According to an embodiment, the wearable device 103 may obtain avatar-related information from the plurality of applications. For example, the plurality of applications may include a first source application and a second source application. For example, the wearable device 103 may obtain first avatar-related information from the first source application and obtain second avatar-related information from the second source application. For example, the first avatar-related information may include information for generating a first avatar set provided by the first source application and information for generating a first item set provided by the first source application. In addition, for example, the second avatar-related information may include information for generating a second avatar set provided by the second source application and information for generating a second item set provided by the second source application.

According to an embodiment, the wearable device 103 may perform processing of the avatar-related information. For example, the wearable device 103 may obtain a scale of the avatar-related information. For example, the wearable device 103 may identify a first scale based on a proportion of the first avatar set provided by the first source application. The first scale may be referred to as a first proportion. For example, the first proportion may include a proportion (or a body proportion) of the first avatar set. The first item set may have the first proportion based on the first scale. Alternatively, for example, the wearable device 103 may identify a second scale based on a proportion of the second avatar set provided by the second source application. The second scale may be referred to as a second proportion. For example, the second proportion may include a proportion (or a body proportion) of the second avatar set. In addition, the second item set may have the second proportion based on the second scale.

According to an embodiment, the wearable device 103 may compare the identified proportion and a designated proportion. For example, the wearable device 103 may compare the designated proportion set in a first application for merging avatars provided by the plurality of applications and the first proportion. Alternatively, for example, the wearable device 103 may compare the designated proportion and the second proportion. In a case that the proportion does not correspond, the wearable device 103 may process the avatar-related information such that the first proportion (or the second proportion) has the designated proportion. As described above, processing of adjusting a proportion of the avatar-related information obtained from the plurality of applications by the wearable device 103 to correspond to the designated proportion may be referred to as normalization. Based on the normalization, the wearable device 103 may merge and manage avatars provided by the plurality of applications through the first application.

According to an embodiment, the wearable device 103 may perform editing of an avatar. For example, the avatar may be included in avatars provided by the plurality of applications. For example, the avatar may be provided by the first source application or the second source application.

For example, the wearable device 103 may change an item worn by the avatar. For example, the wearable device 103 may change an item (or an asset) worn by the avatar based on at least a part of an input of a user to the UI. Alternatively, for example, the wearable device 103 may change the avatar to another avatar.

In operation 1320, the wearable device 103 may execute a second application providing a virtual environment stored in the wearable device 103 based on at least a part of an input of the user. For example, the wearable device 103 may display a virtual environment based on the execution of the second application. For example, the wearable device 103 may execute the second application providing the virtual environment. For example, the second application may indicate a software application stored in the wearable device 103. In other words, unlike a source application of the plurality of applications providing the avatars, the second application may be stored in the wearable device 103.

In operation 1330, the wearable device 103 may check whether a second avatar provided by the second application set for using in the second application exists. For example, the wearable device 103 may check whether the second avatar exists.

According to an embodiment, the wearable device 103 may identify a state of the second application in response to the execution of the second application. For example, the state may include a first state in which an avatar (or an app avatar) provided by the second application set for the second application exists and a second state different from the first state. For example, the second state may include a case that the app avatar provided by the second application is not set for the second application.

In the operation 1330, in a case that the second avatar does not exist (or in the second state), the wearable device 103 may perform operation 1340. In contrast, in the operation 1330, in a case that the second avatar exists (or in the first state), the wearable device 103 may perform operation 1350.

In the operation 1340, the wearable device 103 may display the virtual environment including the first avatar. For example, the wearable device 103 may display the virtual environment including the first avatar based on the visual object displaying the first avatar among the avatars in the second state. The first avatar may be included in the avatars provided by the plurality of applications, which are merged (or compatible) by the first application. For example, the wearable device 103 may display the virtual environment including the first avatar based on an image indicating the first avatar displayed by the visual object of the task bar. Alternatively, for example, in a case that the visual object of the task bar displays a default image different from the avatars provided by the plurality of applications or that the display of the visual object is deactivated, the wearable device 103 may display a screen selecting an app avatar (e.g., the second avatar) provided by the second application. For example, the screen may be at least partially superimposed on the virtual environment.

According to an embodiment, in a case of displaying the virtual environment including an avatar, the wearable device 103 may adjust a scale of the avatar. For example, the wearable device 103 may adjust a scale of the avatar (e.g., the first avatar) to correspond to the scale supported by the second application. The scale of the avatar may be the designated scale of the first application.

According to an embodiment, the wearable device 103 may set a default avatar applicable to each second application based on at least a part of an input to the UI. For example, the default avatar may be displayed through the visual object.

According to an embodiment, the wearable device 103 may perform login for the second application after executing the second application. For example, the wearable device 103 may associate the first avatar provided by the first source application with log-in information of the user. For example, the wearable device 103 may display a visual notification guiding the association between the first avatar and the log-in information. In a case that the first avatar and the log-in information are associated with each other based on an input to the visual notification, the wearable device 103 may perform the login based on the first avatar while executing the second application in which the first avatar is set as the default avatar. For example, the wearable device 103 may request, to a server that manages the second application, authentication for the second application based on the first avatar. Based on a success of the authentication, the wearable device 103 may display the virtual environment including the first avatar. For specific content related to this, the content of FIG. 12A may be referred to.

According to an embodiment, the wearable device 103 may display the UI including a visual object displaying a candidate avatar among the avatars provided by the plurality of applications. In this case, the wearable device 103 may display visual information for notifying the second application with which the candidate avatar is associated, together with the visual notification corresponding to the candidate avatar. For example, in an example with which the first avatar and the second application are associated, the wearable device 103 may display the visual information indicating the second application together with the visual notification for the first avatar. For specific content related to this, the content of FIG. 12B may be referred to.

According to an embodiment, the wearable device 103 may display another visual notification inquiring whether to perform login of a third application different from the second application by using the first avatar with which the log-in information of the user is associated. For example, in a case that the first avatar is selected as the default avatar and the third application is executed, the wearable device 103 may display the other visual notification. Based on an input to the other visual notification, the wearable device 103 may perform login of the third application based on the first avatar.

According to an embodiment, the wearable device 103 may perform a change in the first avatar while displaying the virtual environment provided by the second application including the first avatar. For example, while displaying the virtual environment, the wearable device 103 may perform a change in the first avatar using the UI of the first application. For example, the change in the first avatar may include changing an appearance of the first avatar from a first appearance to a second appearance, or changing from the first avatar to a third avatar. For example, the third avatar may be provided by the second source application among the plurality of applications. According to an embodiment, the wearable device 103 may display the virtual environment including a virtual object notifying a change in the first avatar. For example, the virtual object may include an image indicating the second appearance to be changed from the first appearance. Alternatively, for example, the virtual object may include a dummy avatar and information on the user. For example, the dummy avatar may be used to notify a change in the first avatar. For example, the information on the user may include an account identifier of the user or a name of the user. For specific information related to this, the contents of the FIGS. 11A and 11B may be referred to.

In the operation 1350, the wearable device 103 may display the virtual environment including the second avatar. The second avatar may indicate an example of the app avatar provided by the second application. For example, the wearable device 103 may display the virtual environment including the second avatar in the first state in which the second avatar provided by the second application is set for the second application.

In a wearable device 103 as described above, the wearable device 103 may include memory 517 including one or more storage media storing instructions. The wearable device 103 may include a display 513. The wearable device 103 may include at least one processor 511 including processing circuitry. The instructions, when executed by the at least one processor 511 individually or collectively, may cause the wearable device 103 to display, via the display 513, a task bar including an icon of a first software application for merging avatars provided by source applications. The icon may include a region for displaying an avatar among the avatars. The instructions, when executed by the at least one processor 511 individually or collectively, may cause the wearable device 103 to execute a second software application providing a virtual environment stored in the wearable device 103 based on at least a part of an input of a user. The instructions, when executed by the at least one processor 511 individually or collectively, may cause the wearable device 103 to display, via the display 513, the virtual environment including a first avatar, in a first state in which the first avatar provided by the second software application is set for the second software application. The instructions, when executed by the at least one processor 511 individually or collectively, may cause the wearable device 103 to display, via the display 513, the virtual environment including a second avatar based on the icon displaying the second avatar among the avatars in a second state different from the first state.

According to an embodiment, the instructions, when executed by the at least one processor 511 individually or collectively, may cause the wearable device 103 to identify whether information on the first avatar is obtained based on execution of the second software application. The instructions, when executed by the at least one processor 511 individually or collectively, may cause the wearable device 103 to display the virtual environment including the first avatar in the first state identified based on the information on the first avatar being obtained. The instructions, when executed by the at least one processor 511 individually or collectively, may cause the wearable device 103 to display the virtual environment including the second avatar in the second state identified based on the information on the first avatar not being obtained.

According to an embodiment, the instructions, when executed by the at least one processor 511 individually or collectively, may cause the wearable device 103 to display the virtual environment including the second avatar based on the icon displaying the second avatar in the second state. The instructions, when executed by the at least one processor 511 individually or collectively, may cause the wearable device 103 to display a screen for selecting an avatar provided by the second software application based on the icon displaying an image different from the avatars in the second state. The image may include a default image of the first software application.

According to an embodiment, the instructions, when executed by the at least one processor 511 individually or collectively, may cause the wearable device 103 to execute a third software application, providing another virtual environment, stored in the wearable device 103, based on at least a part of another input of the user after the second software application is terminated. The third software application may not support displaying of an avatar. The instructions, when executed by the at least one processor 511 individually or collectively, may cause the wearable device 103 to display the task bar, together with the other virtual environment, in which display of the icon of the first software application is deactivated.

According to an embodiment, the instructions, when executed by the at least one processor 511 individually or collectively, may cause the wearable device 103 to display a user interface of the first software application based on execution of the first software application. The user interface may include a first portion including a first visual object indicating account information and at least one second visual object indicating a candidate avatar according to the account information and a second portion providing a preview for a selected candidate avatar. The instructions, when executed by the at least one processor 511 individually or collectively, may cause the wearable device 103 to display the user interface including a toggle for using the second avatar for the second software application as a default avatar and an application (app) icon indicating the second software application supporting display of an avatar based on at least a part of an input for the user interface. Based on the activated toggle, in the second state, the virtual environment including the second avatar may be displayed.

According to an embodiment, the instructions, when executed by the at least one processor 511 individually or collectively, may cause the wearable device 103 to obtain information on a first avatar set and information on a first item set provided by a first source application among the source applications. The instructions, when executed by the at least one processor 511 individually or collectively, may cause the wearable device 103 to obtain information on a second avatar set and information on a second item set provided by a second source application different from the first source application among the source applications. Each of the information on the first item set and the information on the second item set may be used for first avatars included in the first avatar set and second avatars included in the second avatar set.

According to an embodiment, the instructions, when executed by the at least one processor 511 individually or collectively, may cause the wearable device 103 to store a body proportion of the first avatars of the first avatar set by converting a first proportion of the first source application to a designated proportion of the first software application. The instructions, when executed by the at least one processor 511 individually or collectively, may cause the wearable device 103 to store a body proportion of the second avatars of the second avatar set by converting a second proportion of the second source application to the designated proportion of the first software application.

According to an embodiment, the designated proportion may be applied to the number of virtual joints forming an avatar and a position of the virtual joints.

According to an embodiment, the instructions, when executed by the at least one processor 511 individually or collectively, may cause the wearable device 103 to display a user interface of the first software application based on execution of the first software application. The user interface may include a first portion including a first visual object indicating account information and at least one second visual object indicating a candidate avatar according to the account information and a second portion providing a preview for a selected candidate avatar. The selected candidate avatar displayed on the second portion may have the designated proportion.

According to an embodiment, the instructions, when executed by the at least one processor 511 individually or collectively, may cause the wearable device 103 to display a user interface of the first software application based on execution of the first software application while displaying the virtual environment including the second avatar in the second state. The instructions, when executed by the at least one processor 511 individually or collectively, may cause the wearable device 103 to identify a second appearance to be changed from a first appearance of the second avatar based on at least a part of an input of the user for the user interface. The instructions, when executed by the at least one processor 511 individually or collectively, may cause the wearable device 103 to display the virtual environment including the second avatar and a virtual object indicating the second appearance.

According to an embodiment, the instructions, when executed by the at least one processor 511 individually or collectively, may cause the wearable device 103 to display a user interface of the first software application based on execution of the first software application while displaying the virtual environment including the second avatar in the second state. The instructions, when executed by the at least one processor 511 individually or collectively, may cause the wearable device 103 to identify a third avatar to be changed from the second avatar based on at least a part of an input of the user for the user interface. The instructions, when executed by the at least one processor 511 individually or collectively, may cause the wearable device 103 to display the virtual environment including a dummy avatar changed from the second avatar and information on the user of the second software application. The dummy avatar may be used to notify a change of the second avatar.

According to an embodiment, the instructions, when executed by the at least one processor 511 individually or collectively, may cause the wearable device 103 to display a screen for the user to log in to the second software application in response to execution of the second software application. The instructions, when executed by the at least one processor 511 individually or collectively, may cause the wearable device 103 to display a user interface of the first software application executed based on an input for the icon while the screen is displayed. The instructions, when executed by the at least one processor 511 individually or collectively, may cause the wearable device 103 to display a visual object guiding to associate the second avatar with log-in information of the user based on at least a part of an input for the user interface.

According to an embodiment, the instructions, when executed by the at least one processor 511 individually or collectively, may cause the wearable device 103 to request, in the second state, to a server managing the second software application, an authentication based on the second avatar in a case that the second avatar and the log-in information are associated based on an input for the visual object. The instructions, when executed by the at least one processor 511 individually or collectively, may cause the wearable device 103 to display the virtual environment including the second avatar based on the authentication being successful.

According to an embodiment, the instructions, when executed by the at least one processor 511 individually or collectively, may cause the wearable device 103 to execute a third software application after the second software application associated with the second avatar is terminated. The instructions, when executed by the at least one processor 511 individually or collectively, may cause the wearable device 103 to display another screen for login of the user for the third software application in response to the execution of the third software application. The instructions, when executed by the at least one processor 511 individually or collectively, may cause the wearable device 103 to display another visual object inquiring whether login of the third software application is to be performed through the second avatar while the other screen is displayed. Another virtual environment provided by the third software application including the second avatar may be displayed in a case that logging in to the third software application through the second avatar based on an input for the other visual object is performed.

According to an embodiment, the user interface may include a first portion including a first visual object indicating account information and at least one second visual object indicating a candidate avatar according to the account information and a second portion providing a preview for a selected candidate avatar. The instructions, when executed by the at least one processor 511 individually or collectively, may cause the wearable device 103 to display visual information indicating that the second software application is associated with the second avatar together with a second visual object corresponding to the second avatar of the user interface after the log-in information and the second avatar are associated based on an input for the visual object.

A method performed by a wearable device 103 as described above may include displaying, via a display 513, a task bar including an icon of a first software application for merging avatars provided by source applications. The icon may include a region for displaying an avatar set among the avatars. The method may include executing a second software application providing a virtual environment stored in the wearable device 103 based on at least a part of an input of a user. The method may include displaying the virtual environment including a first avatar, in a first state in which the first avatar provided by the second software application is set for the second software application. The method may include displaying the virtual environment including a second avatar based on the icon displaying the second avatar among the avatars in a second state different from the first state.

According to an embodiment, the method may include identifying whether information on the first avatar set for the second software application is obtained based on execution of the second software application. The method may include displaying the virtual environment including the first avatar in the first state identified based on the information on the first avatar being obtained. The method may include displaying the virtual environment including the second avatar in the second state identified based on the information on the first avatar not being obtained.

According to an embodiment, the method may include displaying the virtual environment including the second avatar based on the icon displaying the second avatar in the second state. The method may include displaying a screen for selecting an avatar provided by the second software application based on the icon displaying an image different from the avatars in the second state. The image may include a default image of the first software application.

According to an embodiment, the method may include executing a third software application, providing another virtual environment without supporting display of an avatar, stored in the wearable device 103, based on at least a part of another input of the user after the second software application is terminated. The method may include displaying the task bar, together with the other virtual environment, in which display of the icon of the first software application is deactivated.

A non-transitory computer-readable storage medium as described above, when executed individually or collectively by at least one processor 511 of a wearable device 103 including a display 513, may store one or more programs including instructions that cause the wearable device 103 to display, via the display 513, a task bar including an icon of a first software application for merging avatars provided by source applications. The icon may include a region for displaying an avatar set among the avatars. The non-transitory computer-readable storage medium, when executed by the at least one processor 511 individually or collectively, may store one or more programs including instructions that cause the wearable device 103 to execute a second software application providing a virtual environment stored in the wearable device 103 based on at least a part of an input of a user. The non-transitory computer-readable storage medium, when executed by the at least one processor 511 individually or collectively, may store one or more programs including instructions that cause the wearable device 103 to display, via the display 513, the virtual environment including a first avatar, in a first state in which the first avatar provided by the second software application is set for the second software application. The non-transitory computer-readable storage medium, when executed by the at least one processor 511 individually or collectively, may store one or more programs including instructions that cause the wearable device 103 to display, via the display 513, the virtual environment including a second avatar based on the icon displaying the second avatar among the avatars in a second state different from the first state.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device 103 comprising:
memory 517 comprising one or more storage media storing instructions;
a display 513; and
at least one processor 511 including processing circuitry;
wherein the instructions, when executed by the at least one processor 511 individually or collectively, cause the wearable device 103 to:
display, via the display 513, a task bar including a visual object provided by a first application for using avatars provided by a plurality of applications in an application stored in the wearable device 103, wherein the visual object indicates a first avatar among the plurality of avatars;
execute a second application providing a virtual environment stored in the wearable device 103 based on at least a part of an input of a user;
confirm whether a second avatar, which is provided by the second application, set for using in the second application exists; and
display, via the display 513, the virtual environment including the first avatar in a case that the second avatar does not exist.

2. The wearable device 103 of claim 1,
wherein the instructions, when executed by the at least one processor 511 individually or collectively, cause the wearable device 103 to:
display, via the display 513, the virtual environment including the second avatar in a case that the second avatar exists.

3. The wearable device 103 of claim 2,
wherein the instructions, when executed by the at least one processor 511 individually or collectively, cause the wearable device 103 to:
display a screen for selecting an avatar provided by the second application in a case that the visual object indicates an image different from the avatars, and
wherein the image includes a default image of the first application.

4. The wearable device 103 of claim 1,
wherein the instructions, when executed by the at least one processor 511 individually or collectively, cause the wearable device 103 to:
execute a third application, providing another virtual environment, stored in the wearable device 103, based on at least a part of another input of the user after the second application is terminated, wherein the third application does not support displaying of an avatar; and
display the task bar, together with the another virtual environment, in which display of the visual object of the first application is deactivated.

5. The wearable device 103 of claim 1,
wherein the instructions, when executed by the at least one processor 511 individually or collectively, cause the wearable device 103 to:
display a user interface of the first application based on execution of the first application, wherein the user interface includes a first portion including a first visual object indicating account information and at least one second visual object indicating a candidate avatar according to the account information and a second portion providing a preview for a selected candidate avatar; and
display the user interface including a toggle for using the first avatar for the second application as a default avatar and an icon indicating the second application supporting display of an avatar based on at least a part of an input for the user interface, and
wherein the virtual environment including the first avatar is displayed based on the activated toggle.

6. The wearable device 103 of claim 1,
wherein the instructions, when executed by the at least one processor 511 individually or collectively, cause the wearable device 103 to:
obtain information on a first avatar set and information on a first item set provided by a first source application among the plurality of applications; and
obtain information on a second avatar set and information on a second item set provided by a second source application different from the first source application among the plurality of applications; and
wherein each of the information on the first item set and the information on the second item set is used for first avatars included in the first avatar set and second avatars included in the second avatar set.

7. The wearable device 103 of claim 6,
wherein the instructions, when executed by the at least one processor 511 individually or collectively, cause the wearable device 103 to:
store a body proportion of the first avatars of the first avatar set by converting a first proportion of the first source application to a designated proportion of the first application; and
store a body proportion of the second avatars of the second avatar set by converting a second proportion of the second source application to the designated proportion of the first application.

8. The wearable device 103 of claim 7,
wherein the instructions, when executed by the at least one processor 511 individually or collectively, cause the wearable device 103 to:
display a user interface of the first application based on execution of the first application,
wherein the user interface includes a first portion including a first visual object indicating account information and at least one second visual object indicating a candidate avatar according to the account information and a second portion providing a preview for a selected candidate avatar, and
wherein the selected candidate avatar displayed on the second portion has the designated proportion.

9. The wearable device 103 of claim 1,
wherein the instructions, when executed by the at least one processor 511 individually or collectively, cause the wearable device 103 to:
display a user interface of the first application based on execution of the first application while displaying the virtual environment including the first avatar;
identify a second appearance to be changed from a first appearance of the first avatar based on at least a part of an input of the user for the user interface; and
display the virtual environment including the first avatar and a virtual object indicating the second appearance.

10. The wearable device 103 of claim 1,
wherein the instructions, when executed by the at least one processor 511 individually or collectively, cause the wearable device 103 to:
display a user interface of the first application based on execution of the first application while displaying the virtual environment including the first avatar;
identify a third avatar to be changed from the first avatar based on at least a part of an input of the user for the user interface; and
display the virtual environment including a dummy avatar changed from the first avatar and information on the user of the second application, and
wherein the dummy avatar is used to notify a change of the first avatar.

11. The wearable device 103 of claim 1,
wherein the instructions, when executed by the at least one processor 511 individually or collectively, cause the wearable device 103 to:
display a screen for the user to log in to the second application in response to execution of the second application;
display a user interface of the first application executed based on an input for the visual object while the screen is displayed; and
display a visual notification guiding to associate the first avatar with log-in information of the user based on at least a part of an input for the user interface.

12. The wearable device 103 of claim 11,
wherein the instructions, when executed by the at least one processor 511 individually or collectively, cause the wearable device 103 to:
request, to a server managing the second application, an authentication based on the first avatar in a case that the first avatar and the log-in information are associated based on an input for the visual notification; and
display the virtual environment including the first avatar based on the authentication being successful.

13. The wearable device 103 of claim 12,
wherein the instructions, when executed by the at least one processor 511 individually or collectively, cause the wearable device 103 to:
execute a third application after the second application associated with the first avatar is terminated;
display another screen for login of the user for the third application in response to the execution of the third application; and
display another visual notification inquiring whether login of the third application is to be performed through the first avatar while the another screen is displayed, and
wherein another virtual environment provided by the third application including the first avatar is displayed in a case that logging in to the third application through the first avatar based on an input for the another visual notification is performed.

14. A method performed by a wearable device 103 comprising a display 513, the method comprising:
displaying, via the display, a task bar including a visual object provided by a first application for using avatars provided by a plurality of applications in an application stored in the wearable device 103, wherein the visual object indicates a first avatar among the plurality of avatars;
executing a second application providing a virtual environment stored in the wearable device 103 based on at least a part of an input of a user;
confirming whether a second avatar, which is provided by the second application, set for using in the second application exists; and
displaying, via the display 513, the virtual environment including the first avatar in a case that the second avatar does not exist.

15. A non-transitory computer-readable storage medium, when executed individually or collectively by at least one processor 511 of a wearable device 103 comprising a display, stores one or more programs including instructions that cause the wearable device 103 to:
display, via the display 513, a task bar including a visual object provided by a first application for using avatars provided by a plurality of applications in an application stored in the wearable device 103, wherein the visual object indicates a first avatar among the plurality of avatars;
execute a second application providing a virtual environment stored in the wearable device 103 based on at least a part of an input of a user;
confirm whether a second avatar, which is provided by the second application, set for using in the second application exists; and
display, via the display 513, the virtual environment including the first avatar in a case that the second avatar does not exist.
